# EUROPÄISCHE PATENTSCHRIFT

(11) **EP 4 179 620 B1**
(45) Veröffentlichungstag und Bekanntmachung des Hinweises auf die Patenterteilung: **30.09.2026**
(21) Anmeldenummer: 21739317.2
(22) Anmeldetag: 01.07.2021
(51) Int. Cl.: H02P 29/024, H02H 7/085, E21B 6/00, B25D 16/00

(54) **ERKENNUNG EINES RÜCKSCHLAGS ODER EINES DURCHSCHLAGS EINER HANDWERKZEUGMASCHINE MIT EINER LINEAR-OSZILLIERENDEN ABTRIEBSBEWEGUNG**
DETECTING A KIICKBACK OR A BREAKTHROUGH IN A HANDHELD POWER TOOL WITH A LINEAR-OSCILLATING OUTPUT MOVEMENT
DÉTECTION D'UN CHOC EN RETOUR OU D'UN CLAQUAGE D'UNE MACHINE-OUTIL AVEC UN MOUVEMENT DE SORTIE LINÉAIRE OSCILLANT

(30) Priorität: 07.07.2020 DE 102020208479
(43) Veröffentlichungstag der Anmeldung: 17.05.2023
(73) Patentinhaber: Robert Bosch GmbH, 70442 Stuttgart (DE)
(72) Erfinder: INDINO, Ruggero, 71154 Nufringen (DE); DENNIS, Daniel, 72622 Nuertingen (DE); ROSTRO QUIJANO, Alejandro, San Luis Potosi, 78215 (MX); RIGGENMANN, Simon, 70563 Stuttgart (DE)
(86) Internationale Anmeldenummer: PCT/EP2021/068111
(87) Internationale Veröffentlichungsnummer: WO 2022/008328

(56) Entgegenhaltungen:
- EP-A1- 1 461 187
- EP-A1- 2 855 098
- DE-A1- 102014 226 369
- US-A1- 2014 053 419

## Beschreibung

### Stand der Technik

Es ist bereits ein Verfahren zu einer Erkennung eines Rückschlags oder eines Durchschlags einer Werkzeugmaschine mit einer oszillierenden Abtriebsbewegung vorgeschlagen worden, wobei in zumindest einem Verfahrensschritt mittels einer Erfassungseinheit kontinuierlich oder periodisch zumindest eine physikalische Kenngröße der Werkzeugmaschine erfasst wird. Aus der
DE 10 2014 226 369 A1 ist eine Schlagwerkvorrichtung für einen Schlaghammer bekannt, die eine Leerlaufschlagzahl intelligent anpasst. Eine Erfassungseinheit mit Sensoren detektiert verschiedene Betriebszustände wie Schlagbetrieb, Leerlauf und Fehlbetrieb. Eine Recheneinheit passt daraufhin die Leerlaufschlagzahl an eine ermittelte, kritische Grenzschlagzahl an, um einen unerwünschten Fehlbetrieb zu vermeiden. Ferner ist aus US 2014/053419 A1 eine Säbelsäge bekannt, die mit einem Steuerungssystem zur Erkennung einer unerwünschten Rotation ausgestattet ist. Dieses System nutzt einen Drehratensensor, um eine plötzliche, unkontrollierte Abwärtsbewegung der Säge nach dem Durchtrennen eines Werkstücks zu detektieren. Daraufhin leitet eine Steuereinheit Schutzmaßnahmen ein.

### Offenbarung der Erfindung

Die Erfindung geht aus von einem Verfahren mit den Merkmalen des Anspruch 1, zu einer Erkennung eines Rückschlags oder eines Durchschlags einer Handwerkzeugmaschine (im Folgenden Werkzeugmaschine), mit einer linear-oszillierenden, Abtriebsbewegung, wobei in zumindest einem Verfahrensschritt mittels einer Erfassungseinheit kontinuierlich oder periodisch zumindest eine physikalische Kenngröße eines Motors der Handwerkzeugmaschine erfasst wird.

Es wird vorgeschlagen, dass in zumindest einem Verfahrensschritt mittels einer Auswerteeinheit ein Rückschlag oder ein Durchschlag der Werkzeugmaschine in Abhängigkeit von zumindest zwei zeitlich versetzt erfassten Werten der Kenngröße der Werkzeugmaschine erkannt wird, wobei den zumindest zwei Werten der Kenngröße jeweils ein zumindest im Wesentlichen identischer Wert einer diskreten Positionskenngröße der linear-oszillierenden, Abtriebsbewegung der Werkzeugmaschine zugeordnet ist.

Unter "im Wesentlichen identisch" soll insbesondere verstanden werden, dass sich zwei Werte, insbesondere die zwei zeitlich versetzt erfassten Werte der Kenngröße, um höchstens 10%, vorzugsweise höchstens 5% und besonders bevorzugt höchstens 3%, eines maximalen Werts der zwei Werte unterscheiden. Unter einer "physikalischen Kenngröße" soll insbesondere eine Kenngröße des Motors der Werkzeugmaschine, verstanden werden, welche zumindest eine physikalische Eigenschaft des Gegenstands beschreibt. Insbesondere ist die physikalische Kenngröße derart ausgebildet, dass ein Rückschlag oder ein Durchschlag der Werkzeugmaschine einen Wert der physikalischen Kenngröße beeinflusst. Die physikalische Kenngröße ist vorzugsweise als eine Drehzahl des Motors oder als ein Zeitpunkt eines spezifischen Signalverlaufs in einem erfassten magnetischen Signal oder einem erfassten Stromsignal des Motors ausgebildet. Unter einem "Rückschlag" einer Werkzeugmaschine soll insbesondere eine durch ein Zusammenwirken des Bearbeitungswerkzeugs der Werkzeugmaschine mit einem zu bearbeitenden Werkstück und/oder einem anderen Objekt erzeugte spontane Bewegung der Werkzeugmaschine verstanden werden. Insbesondere wird die Werkzeugmaschine bei dem Rückschlag von dem Werkstück und/oder dem anderen Objekt wegbewegt oder zu dem Werkstück und/oder dem anderen Objekt hinbewegt. Eine Ursache für einen Rückschlag der Werkzeugmaschine kann insbesondere auch ein Verklemmen des Bearbeitungswerkzeugs in oder an einem Werkstück sein. Insbesondere führt ein Verklemmen einer Werkzeugmaschine mit oszillierender, insbesondere linear-oszillierender, Abtriebsbewegung zu einem Hin- und Herbewegen der gesamten Werkzeugmaschine und/oder zu einer spontanen oszillierenden Kraftübertragung auf die Werkzeugmaschine und einen Benutzer. Unter einem "Durchschlag" soll insbesondere eine durch ein spontanes Wegfallen eines Zusammenwirkens des Bearbeitungswerkzeugs der Werkzeugmaschine mit einem zu bearbeitenden Werkstück ausgelöste Bewegung der Werkzeugmaschine verstanden werden, wobei insbesondere ein Teil einer durch die Werkzeugmaschine auf das Werkstück ausgeübten Kraft, beispielsweise durch
ein Durchstoßen und/oder ein Durchsägen des Werkstücks, zumindest im Wesentlichen direkt in eine Bewegung der Werkzeugmaschine umgewandelt wird. Insbesondere erfolgt eine Bewegung bei dem Durchschlag in eine Richtung, die zumindest im Wesentlichen einer Bearbeitungsrichtung des zuvor bearbeiteten Werkstücks entspricht. Der Rückschlag und der Durchschlag sind bevorzugt jeweils als eine relativ zu einer regulären Führungsbewegung der Werkzeugmaschine ruckartige Bewegung ausgebildet. Sowohl der Rückschlag als auch der Durchschlag der Werkzeugmaschine weisen insbesondere ein hohes Verletzungspotential bei einer Verwendung der Werkzeugmaschine durch einen Benutzer auf. Unter einer "Positionskenngröße" soll insbesondere eine Kenngröße der oszillierenden Abtriebsbewegung der Werkzeugmaschine verstanden werden, welche eine Bewegung und/oder eine Position des die Abtriebsbewegung ausführenden Bearbeitungswerkzeugs oder eines die Abtriebsbewegung ausführenden Abtriebselements, wie beispielsweise einer Hubstange, der Werkzeugmaschine innerhalb einer Periode der Abtriebsbewegung beschreibt oder angibt, wobei die Positionskenngröße für jeden Punkt innerhalb einer Periode der Abtriebsbewegung genau einen Wert aufweist. Vorzugsweise ist die Positionskenngröße als ein Beschleunigungsvektor oder ein Geschwindigkeitsvektor des Bearbeitungswerkzeugs oder des Abtriebselements oder als eine davon abhängige Kenngröße der Werkzeugmaschine, insbesondere des Motors, ausgebildet, wie beispielsweise eine Anzahl an Rotationen, Signalspitzen o. dgl. des Motors oder ein Zeitpunkt dieser Kenngrößen innerhalb einer Periode der Abtriebsbewegung. Insbesondere ist eine Art der Positionskenngröße abhängig von einer Art der erfassten physikalischen Kenngröße der Werkzeugmaschine. Beispielsweise ist die Kenngröße als eine Drehzahl des Motors der Werkzeugmaschine ausgebildet, wobei die Positionskenngröße beispielsweise als ein Zeitpunkt einer/eines periodisch wiederkehrenden Position und/oder Bewegung des Bearbeitungswerkzeugs und/oder eines periodisch wiederkehrenden Zustands in der oszillierenden, insbesondere linear-oszillierenden, Abtriebsbewegung der Werkzeugmaschine ausgebildet ist. Die Positionskenngröße weist bevorzugt eine diskrete Anzahl an voneinander verschiedenen Werten auf, welche, insbesondere gleichmäßig, auf eine Periode der oszillierenden, insbesondere linear-oszillierenden, Abtriebsbewegung der Werkzeugmaschine verteilt ist. Unter einer "Periode" der oszillierenden, insbesondere linear-oszillierenden, Abtriebsbewegung soll insbesondere ein kleinstes zeitliches Intervall verstanden werden, in dem sich die Abtriebsbewegung beim Betrieb der Werkzeugmaschine wiederholt. Insbesondere ist die Periode der oszillierenden, insbesondere linear-oszillierenden, Abtriebsbewegung ein Zeitraum, den das Bearbeitungswerkzeug benötigt, beim Betrieb der Werkzeugmaschine genau einen Bewegungszyklus zu durchlaufen. Bevorzugt weist das Bearbeitungswerkzeug bei einem Beginn des Bewegungszyklus und einem Ende des Bewegungszyklus eine zumindest im Wesentlichen identische Position, Geschwindigkeit und Beschleunigung auf.

Unter einer "oszillierenden Abtriebsbewegung" soll insbesondere eine Abtriebsbewegung der Werkzeugmaschine verstanden werden, bei der sich ein Abtriebselement, wie beispielsweise eine Hubstange, und/oder das Bearbeitungswerkzeug der Werkzeugmaschine entlang eines Bewegungspfads pendelnd hin und her bewegt, wobei insbesondere der Bewegungspfad innerhalb einer Periode der Abtriebsbewegung einmal in eine Richtung und einmal in eine entgegengesetzte Richtung überstrichen wird. Bei einer "linear-oszillierenden Abtriebsbewegung" ist der Bewegungspfad bevorzugt zumindest im Wesentlichen geradlinig ausgebildet. Unter "im Wesentlichen geradlinig" soll insbesondere eine Erstreckung eines Objekts, insbesondere des Bewegungspfads, verstanden werden, bei der Tangenten an längste Seitenflächen des Objekts, insbesondere entlang des Bewegungspfads, mit einer Haupterstreckungsachse des Objekts einen Winkel von weniger als 8°, vorzugsweise weniger als 5° und bevorzugt weniger als 2°, aufspannen und ganz besonders bevorzugt parallel zur Haupterstreckungsachse des Objekts sind.

Bevorzugt wird die physikalische Kenngröße mittels der Erfassungseinheit in Betriebszuständen der Werkzeugmaschine erfasst, in denen das Bearbeitungswerkzeug bewegt wird. Vorzugsweise wird die physikalische Kenngröße mittels der Erfassungseinheit mit einer Frequenz von mindestens 50 Hz, vorzugsweise mindestens 100 Hz, bevorzugt mindestens 200 Hz und besonders bevorzugt mindestens 750 Hz, erfasst, wobei insbesondere die Frequenz eine Anzahl von Werten der Kenngröße angibt, welche innerhalb einer Sekunde erfasst wird. Vorzugsweise wird in zumindest einem Verfahrensschritt, insbesondere vor einer Auswertung der Kenngröße zur Erkennung von einem Rückschlag oder einem Durchschlag durch die Auswerteeinheit, mittels der Auswerteeinheit oder der Erfassungseinheit ein erfasster zeitlicher Verlauf der physikalischen Kenngröße gefiltert, insbesondere zu einer Verringerung von Rauscheffekten. Es ist auch denkbar, dass einzelne Werte der physikalischen Kenngröße jeweils hinsichtlich Rauscheffekten gefiltert werden, beispielsweise durch einen Vergleich mit einem Rauschgrenzwert der Kenngröße und/oder jeweils anderen Werten der physikalischen Kenngröße, welchen vorzugsweise jeweils ein identischer oder ähnlicher Wert der Positionskenngröße zugeordnet ist wie dem jeweiligen einzelnen Wert. Bevorzugt werden die zwei zeitlich-versetzt erfassten Werte der Kenngröße in unterschiedlichen Perioden der linear-oszillierenden, Abtriebsbewegung erfasst. Vorzugsweise wird in zumindest einem Verfahrensschritt zur Erkennung eines Rückschlags oder eines Durchschlags eine Änderung der physikalischen Kenngröße, insbesondere des zeitlichen Verlaufs der Kenngröße, relativ zu einem letzten Erfassungszeitpunkt der Kenngröße ermittelt, an dem der Kenngröße ein zumindest im Wesentlichen identischer Wert der Positionskenngröße zugeordnet war wie zu einem momentanen Erfassungszeitpunkt, insbesondere eines zu einem Ermitteln der Änderung herangezogenen Werts der Kenngröße. Vorzugsweise wird in zumindest einem Verfahrensschritt mittels der Auswerteeinheit in Abhängigkeit von den zwei erfassten Werten der Kenngröße, welche jeweils zu einem Zeitpunkt erfasst wurden, bei dem das Bearbeitungswerkzeug eine zumindest im Wesentlichen identische Position, insbesondere Positionskenngröße, aufweist und/oder die Abtriebsbewegung der Werkzeugmaschine einen zumindest identischen Betrag der Positionskenngröße aufweist ein Rückschlag oder ein Durchschlag der Werkzeugmaschine erkannt. Besonders bevorzugt wird ein Rückschlag oder ein Durchschlag mittels der Erfassungseinheit und/oder der Auswerteeinheit innerhalb von höchstens 20 ms, vorzugsweise höchstens 10 ms und bevorzugt höchstens 5 ms, erkannt.

Durch die erfindungsgemäße Ausgestaltung des Verfahrens kann eine vorteilhaft schnelle Erkennung von Rückschlägen und Durchschlägen bei Werkzeugmaschinen mit linear hin- und-her bewegtem Abtrieb und/oder mit einem Mechanismus zur Erzeugung einer Linearbewegung aus einer Rotationsbewegung des Motors, wie beispielsweise Säbelsägen, ermöglicht werden. Insbesondere entstehen bei solchen Werkzeugmaschinen während eines Hubs eines Bearbeitungswerkzeugs, insbesondere auch schon in einem Leerlauf, schon starke Schwankungen in der Drehzahl, wodurch eine Erkennung von Rückschlägen und Durchschlägen der Werkzeugmaschine nur über einen Vergleich von Werten der Drehzahl erschwert und/oder lediglich über einen längeren Zeitraum möglich ist. Um einen Drehzahlabfall durch einen Rückschlag oder einen Durchschlag bei Werkzeugmaschinen mit oszillierender, insbesondere linear-oszillierender Abtriebsbewegung zuverlässig zu erkennen, wäre eine starke Filterung eines zeitlichen Verlaufs der Drehzahl notwendig, wobei durch einen dadurch entstehenden Phasenverzug eine Erkennungszeit des Rückschlags oder des Durchschlags länger wird. Durch die erfindungsgemäße Ausgestaltung des Verfahrens kann, insbesondere durch die Berücksichtigung der Positionskenngröße bei einer Auswahl der zu vergleichenden Werte der Kenngröße, eine derartige starke Filterung der Drehzahl vorteilhaft entfallen. Es kann eine vorteilhaft hohe Sicherheit eines Benutzers bei einer Verwendung der Werkzeugmaschine erreicht werden, insbesondere da durch eine schnelle Erkennung von Rückschlägen und Durchschlägen eine vorteilhaft schnelle Deaktivierung oder Abbremsung des Bearbeitungswerkzeugs erreicht werden kann, wodurch eine Verletzungsgefahr für den Benutzer vorteilhaft gesenkt werden kann. Es kann eine Lebensdauer der Werkzeugmaschine und/oder des Bearbeitungsgeräts vorteilhaft erhöht werden, da eine erhöhte Belastung bei oder nach einem Rückschlag oder einem Durchschlag vorteilhaft verhindert und/oder eine Dauer der erhöhten Belastung vorteilhaft verkürzt werden kann.

Des Weiteren wird vorgeschlagen, dass in zumindest einem Verfahrensschritt mittels der Auswerteeinheit, insbesondere spezifischen oder allen, erfassten Werten der Kenngröße in Abhängigkeit von einem Erfassungszeitpunkt jeweils zumindest ein Wert der Positionskenngröße zugeordnet wird. Es kann eine vorteilhaft schnelle Auswahl der Werte der Kenngröße zu einer Erkennung eines Rückschlags oder eines Durchschlags der Werkzeugmaschine ermöglicht werden. Vorzugsweise wird spezifischen oder allen erfassten Werten der Kenngröße mittels der Auswerteeinheit jeweils genau ein Wert der Positionskenngröße zugeordnet. Bevorzugt werden die erfassten Werte der Kenngröße zu einer Erkennung eines Durchschlags oder eines Rückschlags mittels der Auswerteeinheit jeweils in Abhängigkeit von einem den einzelnen Werten der Kenngröße zugeordneten Wert der Positionskenngröße ausgewählt. Besonders bevorzugt weisen jeweils ein Wert der Kenngröße und ein dem Wert der Kenngröße zugeordneter Wert der Positionskenngröße einen zumindest im Wesentlichen identischen Erfassungszeitpunkt auf. Insbesondere weist ein einem Wert der Positionskenngröße zugeordneter Wert der Kenngröße einen Erfassungszeitpunkt auf, welcher näher an einem Erfassungszeitpunkt des Werts der Positionskenngröße, welchem der Wert der Kenngröße zugeordnet ist, liegt als alle anderen erfassten Werte der Kenngröße. Insbesondere bei einer Anzahl an Werten der Positionskenngröße, die innerhalb eines Zeitintervalls, insbesondere einer Periode der Abtriebsbewegung, geringer ist als eine Anzahl an Werten der Kenngröße ist denkbar, dass lediglich spezifischen erfassten Werten der Kenngröße jeweils ein Wert der Positionskenngröße zugeordnet wird, wobei insbesondere die Werte der Kenngröße ausgewählt werden, die einen zumindest im Wesentlichen identischen Erfassungszeitpunkt aufweisen wie ein Wert der Positionskenngröße oder die einen Erfassungszeitpunkt aufweisen, welcher näher an einem Erfassungszeitpunkt eines Werts der Positionskenngröße liegt als alle anderen erfassten Werte der Kenngröße. Vorzugsweise wird die Kenngröße, insbesondere Werte der Kenngröße, mittels der Erfassungseinheit jeweils lediglich für bestimmte vorgegebene Werte der Positionskenngröße erfasst. Insbesondere wird die Kenngröße mittels der Erfassungseinheit jeweils nur zu Erfassungszeitpunkten erfasst, denen ein bestimmter vorgegebener Wert der Positionskenngröße zugeordnet ist. Es kann eine vorteilhaft geringe Anzahl an zu erfassenden und auszuwertenden Werten der Kenngröße zu einer Erkennung eines Rückschlags oder eines Durchschlags ermöglicht werden. Dadurch kann eine vorteilhaft einfache und kostengünstige Ausgestaltung der Erfassungseinheit und/oder der Auswerteeinheit erreicht werden. Es ist aber auch denkbar, dass die Kenngröße mittels der Erfassungseinheit, insbesondere unabhängig von der Positionskenngröße, zumindest im Wesentlichen kontinuierlich erfasst wird, wobei vorzugsweise zu einer Erkennung eines Rückschlags oder eines Durchschlags jeweils für einen vorbestimmten Wert der Positionskenngröße zumindest zwei Werte der Kenngröße ausgewählt werden.

Zudem wird vorgeschlagen, dass in zumindest einem Verfahrensschritt mittels der Auswerteeinheit eine Differenz oder ein Quotient der zumindest zwei zeitlich versetzt erfassten Werte der Kenngröße ermittelt wird und zu einer Erkennung eines Rückschlags oder eines Durchschlags der Werkzeugmaschine mit zumindest einem Grenzwert verglichen wird. Es kann eine vorteilhaft schnelle und einfache Erkennung eines Rückschlags oder eines Durchschlags der Werkzeugmaschine ermöglicht werden. Es ist denkbar, dass in der Auswerteeinheit und/oder einer Speichereinheit mehr als ein Grenzwert zur Erkennung eines Rückschlags oder eines Durchschlags der Werkzeugmaschine hinterlegt ist. Insbesondere wird in zumindest einem Verfahrensschritt mittels der Auswerteeinheit in Abhängigkeit von einem Betriebszustand der Werkzeugmaschine, von einer räumlichen Lage der Werkzeugmaschine, von einer Bearbeitungsbewegung der Werkzeugmaschine durch einen Benutzer, von einer Art eines zu bearbeitenden Werkstücks o. dgl. zumindest ein Grenzwert zu einem Vergleich mit der Differenz oder dem Quotienten ausgewählt. Vorzugsweise wird bei einer Überschreitung des Grenzwerts mittels der Auswerteeinheit zumindest ein elektrisches und/oder elektronisches Steuersignal ausgegeben, welches insbesondere eine Erkennung eines Rückschlags oder eines Durchschlags signalisiert. Unter einem "Steuersignal" soll insbesondere ein elektrisches und/oder elektronisches Signal, wie beispielsweise ein Spannungs- oder Stromsignal und/oder ein digitales Datenpaket, verstanden werden, das dazu vorgesehen ist, durch eine Verarbeitung mittels einer elektronischen Steuereinheit zumindest eine Funktion eines elektrischen und/oder elektronischen Geräts, insbesondere der Werkzeugmaschine, einer Steuer- und/oder Regeleinheit der Werkzeugmaschine und/oder des Motors der Werkzeugmaschine, zu steuern. Es ist denkbar, dass mittels der Auswerteeinheit zwischen einem Rückschlag und einem Durchschlag unterschieden wird, wobei insbesondere bei einem Rückschlag ein anderes elektrisches und/oder elektronisches Steuersignal ausgegeben wird wie bei einem Durchschlag. Beispielsweise wird mittels der Auswerteeinheit zu einer Unterscheidung von einem Rückschlag und einem Durchschlag ein den Grenzwert überschreitender Betrag der Differenz oder des Quotienten herangezogen, wobei insbesondere bei einem Rückschlag ein höherer Wert für den, den Grenzwert überschreitenden Betrag ermittelt wird. Es ist auch denkbar, dass zu einer Unterscheidung von einem Rückschlag und einem Durchschlag mittels der Auswerteeinheit eine Bewegung der Werkzeugmaschine und/oder des Bearbeitungswerkzeugs ausgewertet wird. Insbesondere wird die Werkzeugmaschine und/oder das Bearbeitungswerkzeug bei einem Rückschlag in eine andere Richtung relativ zu einer vorherigen Bearbeitungsbewegung beschleunigt wie bei einem Durchschlag. Insbesondere wird mittels des elektrischen und/oder elektronischen Steuersignals zumindest eine Funktion der Werkzeugmaschine gesteuert. Beispielsweise wird mittels des elektrischen und/oder elektronischen Steuersignals der Motor der Werkzeugmaschine abgeschaltet und/oder über eine Kupplung der Werkzeugmaschine von einem Antriebsstrang der Werkzeugmaschine getrennt. Insbesondere wird mittels der Auswerteeinheit über das Steuersignal eine Solldrehzahl des Motors der Werkzeugmaschine angepasst. Bevorzugt wird mittels einer Steuer- und/oder Regeleinheit der Werkzeugmaschine eine Drehzahl des Motors in Abhängigkeit von der vorgegebenen angepassten Solldrehzahl eingestellt. Alternativ oder zusätzlich ist denkbar, dass mittels des elektrischen und/oder elektronischen Steuersignals, insbesondere bei einem Verklemmen des Bearbeitungswerkzeugs bei einem Rückschlag, ein Motorstrom des Motors kurzzeitig erhöht wird, insbesondere zu einem Losreißen des Bearbeitungswerkzeugs. Alternativ oder zusätzlich ist denkbar, dass mittels des elektrischen und/oder elektronischen Steuersignals eine Drehzahl des Motors, insbesondere zeitweise, gedrosselt wird. Vorzugsweise wird die Werkzeugmaschine, insbesondere der Motor, nach einem vorbestimmten Zeitintervall oder bei einer Erfassung eines weiteren elektrischen und/oder elektronischen Steuersignals mittels der Auswerteeinheit wieder in einen regulären Betriebszustand zu einer Bearbeitung eines Werkstücks versetzt. Insbesondere wird bei einer Ausgabe des Steuersignals mittels der Auswerteeinheit zumindest eine Ausgabeeinheit der Werkzeugmaschine angesteuert. Bevorzugt wird mittels der Ausgabeeinheit, insbesondere bei einer Erkennung eines Rückschlags oder eines Durchschlags, in Abhängigkeit von dem Steuersignal zumindest ein haptisches, akustisches und/oder visuelles Signal ausgegeben, vorzugsweise zu einer Warnung eines Benutzers der Werkzeugmaschine und/oder anderer Personen in einem Umfeld der Werkzeugmaschine. Es ist denkbar, dass die physikalische Kenngröße, insbesondere ein zeitlicher Verlauf der physikalischen Kenngröße, mittels der Erfassungseinheit oder mittels der Auswerteeinheit, insbesondere vor einer Auswahl der zwei Werte der Kenngröße, gefiltert wird, insbesondere zu einem Reduzieren und/oder einem Entfernen von Rauschsignalen. Beispielsweise ist denkbar, dass mittels der Erfassungseinheit oder mittels der Auswerteeinheit ein gleitender Mittelwert der physikalischen Kenngröße bestimmt wird, eine exponentielle Glättung des zeitlichen Verlaufs der Kenngröße erfolgt oder ein anderer, einem Fachmann bekannter low-pass-Filter angewendet wird. Beispielsweise erfolgt die exponentielle Glättung des zeitlichen Verlaufs der Kenngröße über eine Gleichung: ${y}_{filter} \left(t\right) = α ⋅ y \left(t\right) + \left(1-α\right) ⋅ {y}_{filter} \left(t-1\right)$ mit einem Glättungsfaktor α, der insbesondere einem Wert aus einem Wertebereich zwischen 0,005 und 1 entspricht.

Ferner wird vorgeschlagen, dass in zumindest einem Verfahrensschritt mittels der Erfassungseinheit eine Magnetfeldkenngröße oder eine Stromkenngröße eines Elektromotors der Werkzeugmaschine erfasst wird, wobei mittels der Auswerteeinheit in Abhängigkeit von der erfassten Magnetfeldkenngröße oder Stromkenngröße die Kenngröße und/oder die Positionskenngröße ermittelt wird. Es kann eine vorteilhaft kostengünstige Ausgestaltung der Werkzeugmaschine erreicht werden, insbesondere da weitere Sensoren zusätzlich zum Elektromotor und einer Leistungselektronik der Werkzeugmaschine entfallen können. Dadurch können vorteilhaft geringe Herstellungs- und Montagekosten der Werkzeugmaschine ermöglicht werden. Vorzugsweise ist der Elektromotor als bürstenloser Motor, insbesondere bürstenloser Gleichstrommotor, ausgebildet. Bevorzugt wird die Magnetfeldkenngröße, insbesondere kontinuierlich, mittels Hall-Sonden des Elektromotors, welche als Teil der Erfassungseinheit ausgebildet sind, erfasst. Insbesondere wird die Stromkenngröße, insbesondere kontinuierlich, mittels Sensorelementen des Elektromotors oder der Leistungselektronik, welche als Teil der Erfassungseinheit ausgebildet sind, an Eingangsanschlüssen von Spulenpaaren des Elektromotors erfasst. Insbesondere wird jedes Spulenpaar des Elektromotors jeweils mit einem gleichen elektrischen Strom angesteuert, wobei insbesondere verschiedene Spulenpaare des Elektromotors jeweils zeitversetzt zueinander angesteuert werden. Vorzugsweise wird mittels der Auswerteeinheit über die Magnetfeldkenngröße und/oder die Stromkenngröße eine Position und/oder eine Umdrehung eines Rotors des Elektromotors ermittelt. Vorzugsweise wird mittels der Auswerteeinheit in Abhängigkeit von der ermittelten Position des Rotors und/oder einer Anzahl an ermittelten Umdrehungen des Rotors die Positionskenngröße ermittelt. Vorzugsweise ist die Magnetfeldkenngröße als eine in zumindest einer Hall-Sonde induzierte Spannung ausgebildet, welche sich durch eine Bewegung eines am Rotor des Elektromotors befestigten Magneten während einer Rotationsbewegung des Rotors relativ zur Hall-Sonde periodisch ändert. Vorzugsweise ist die Stromkenngröße als ein elektrischer Strom ausgebildet, welcher an einer Spule des Elektromotors zu einer Beschleunigung des Rotors eingespeist wird. Insbesondere erfolgt durch die Stromkenngröße an den verschiedenen Spulenpaaren des Elektromotors eine Kommutierung des Elektromotors.

Des Weiteren wird vorgeschlagen, dass in zumindest einem Verfahrensschritt mittels der Auswerteeinheit in Abhängigkeit von einem Erfassungszeitpunkt eines erfassten spezifischen Signalverlaufs innerhalb eines zeitlichen Verlaufs der Magnetfeldkenngröße oder der Stromkenngröße die Kenngröße ermittelt wird, wobei sich der spezifische Signalverlauf bei der Abtriebsbewegung, insbesondere genau einmal, periodisch wiederholt. Es kann eine vorteilhaft schnelle Erkennung eines Rückschlags oder eines Durchschlags ermöglicht werden, insbesondere da eine Erfassung und eine Zuordnung von Werten der Drehzahl des Motors als Kenngröße entfallen kann. Unter einem "spezifischen Signalverlauf" soll insbesondere eine charakteristische Form, wie beispielsweise eine Signalflanke, ein Signalpeak oder ein Signalplateau mit einer spezifischen zeitlichen Länge, eines zeitlichen Verlaufs eines Signals, insbesondere des zeitlichen Verlaufs der Magnetfeldkenngröße oder der Stromkenngröße, verstanden werden. Bevorzugt ist der zeitliche Verlauf der Magnetfeldkenngröße und der Stromkenngröße jeweils zumindest im Wesentlichen als ein Rechtecksignal, als ein Dreiecksignal oder als ein Trapezsignal ausgebildet. Vorzugsweise wird mittels der Erfassungseinheit zumindest ein zeitlicher Verlauf der Magnetfeldkenngröße oder der Stromkenngröße erfasst. Es ist aber auch denkbar, dass eine Mehrzahl von zeitlichen Verläufen der Magnetfeldkenngröße oder der Stromkenngröße erfasst wird, wobei insbesondere der spezifische Signalverlauf in mehr als einem der zeitlichen Verläufe erfasst wird. Insbesondere entspricht eine Gesamtanzahl an unterschiedlichen zeitlichen Verläufen der Magnetfeldkenngröße oder der Stromkenngröße des Elektromotors einer Anzahl an Phasen, über die eine Kommutierung des Elektromotors erfolgt. Besonders bevorzugt ist der spezifische Signalverlauf als eine Signalflanke im zeitlichen Verlauf der Magnetfeldkenngröße oder der Stromkenngröße ausgebildet, welche insbesondere durch einen Anstieg oder Abfall einer induzierten Spannung in einer der Hall-Sonden bei einem Vorbeibewegen eines am Rotor befestigten Magneten oder durch einen Anstieg oder Abfall eines in eine der Spulen eingespeisten elektrischen Stroms zu einer Beschleunigung des Rotors entsteht. Bevorzugt wiederholt sich der spezifische Signalverlauf in Abhängigkeit von einer Anzahl an Kommutierungsphasen des Elektromotors periodisch innerhalb einer Umdrehung des Rotors. Beispielsweise wiederholt sich der spezifische Signalverlauf bei einem dreiphasigen Elektromotor dreimal während einer vollständigen Umdrehung des Motors. Es ist auch denkbar, dass mittels der Erfassungseinheit der spezifische Signalverlauf in Abhängigkeit von einer Reihenfolge innerhalb einer vollständigen Umdrehung des Rotors oder einer Periode der linear-oszillierenden, Abtriebsbewegung erfasst wird. Beispielsweise wird mittels der Erfassungseinheit die als ein Erfassungszeitpunkt einer ersten Signalflanke der Magnetfeldkenngröße oder der Stromkenngröße innerhalb einer vollständigen Umdrehung des Rotors oder einer Periode der linear-oszillierenden, Abtriebsbewegung ausgebildete Kenngröße erfasst. Insbesondere wiederholt sich die erste Signalflanke der Magnetfeldkenngröße oder der Stromkenngröße innerhalb einer vollständigen Umdrehung des Rotors oder einer Periode der linear-oszillierenden, Abtriebsbewegung genau einmal innerhalb der vollständigen Umdrehung des Rotors oder der Periode der linear-oszillierenden, Abtriebsbewegung. Vorzugsweise ist die physikalische Kenngröße als ein Zeitintervall zwischen zwei Erfassungszeitpunkten des spezifischen Signalverlaufs ausgebildet. Es ist auch denkbar, dass mittels der Auswerteeinheit mehrere Zeitintervalle zwischen Erfassungszeitpunkten unterschiedlicher spezifischer Signalverläufe innerhalb des zeitlichen Verlaufs der Magnetfeldkenngröße oder der Stromkenngröße ermittelt werden und insbesondere zu einer Erkennung eines Rückschlags oder eines Durchschlags mit zuvor ermittelten Zeitintervallen zwischen Erfassungszeitpunkten der jeweiligen unterschiedlichen spezifischen Signalverläufe verglichen werden. Alternativ oder zusätzlich ist denkbar, dass die physikalische Kenngröße als ein Zeitintervall zwischen spezifischen Signalverläufen innerhalb des zeitlichen Verlaufs der Magnetfeldkenngröße oder der Stromkenngröße, als eine Taktfrequenz von Halb-Brücken des als bürstenloser Gleichstrommotor ausgebildeten Elektromotors der Werkzeugmaschine, als eine Frequenz eines Phasenstroms des als bürstenloser Gleichstrommotor ausgebildeten Elektromotors der Werkzeugmaschine oder als eine Vibrationskenngröße der Werkzeugmaschine ausgebildet ist. Unter einer "Vibrationskenngröße" soll insbesondere eine Kenngröße verstanden werden, welche eine periodische Schwingung eines Objekts, insbesondere der Werkzeugmaschine, beschreibt oder angibt. Im Folgenden werden Beispiele alternativer Kenngrößen außerhalb der Erfindung aufgeführt: Bei einer Ausgestaltung der Kenngröße als Vibrationskenngröße der Werkzeugmaschine wird die Kenngröße mittels der Erfassungseinheit oder der Auswerteeinheit hinsichtlich eines Rauschens und/oder einer erfassten Bearbeitungsbewegung der Werkzeugmaschine gefiltert. Als weiteres Beispiel ist denkbar, dass die physikalische Kenngröße mittels der Erfassungseinheit zumindest im Wesentlichen direkt an dem Bearbeitungswerkzeug erfasst wird, wobei insbesondere die Kenngröße als eine Hubzahl einer Hubstange der Werkzeugmaschine oder des Bearbeitungswerkzeugs, eine Position, eine Geschwindigkeit und/oder eine Beschleunigung der Hubstange oder des Bearbeitungswerkzeugs o. dgl. ausgebildet ist. Es ist auch denkbar, dass die Kenngröße als ein Zeitintervall zwischen zwei Hüben der Hubstange oder des Bearbeitungswerkzeugs ausgebildet ist. Alternativ oder zusätzlich ist denkbar, dass zur Erkennung eines Rückschlags oder eines Durchschlags mittels der Auswerteeinheit eine zeitliche Ableitung oder ein Integral einer erfassten Kenngröße, insbesondere eines zeitlichen Verlaufs der erfassten Kenngröße, herangezogen wird, wobei insbesondere zumindest zwei Werte der zeitlichen Ableitung oder des Integrals der erfassten Kenngröße, welchen jeweils ein zumindest im Wesentlichen identischer Wert der Positionskenngröße zugeordnet ist, miteinander verglichen werden.

Erfindungsgemäß wird als Ausgestaltung vorgeschlagen, dass in zumindest einem Verfahrensschritt zu einer Ermittlung der Positionskenngröße mittels der Auswerteeinheit zumindest ein Übersetzungsparameter eines Getriebes der Werkzeugmaschine herangezogen wird. Es kann eine vorteilhaft einfache und schnelle Ermittlung der Positionskenngröße aus der erfassten Magnetfeldkenngröße oder Stromkenngröße ermöglicht werden. Vorzugsweise können weitere Sensoren zur Erfassung der Positionskenngröße entfallen. Dadurch können vorteilhaft geringe Herstellungs- und Montagekosten der Werkzeugmaschine sowie eine vorteilhaft einfache Nachrüstbarkeit bei älteren Werkzeugmaschinen erreicht werden. Unter einem "Übersetzungsparameter" soll insbesondere ein Parameter des Getriebes verstanden werden, welcher eine Übersetzung oder Umwandlung einer Bewegung des Elektromotors in die linear-oszillierende, Abtriebsbewegung durch das Getriebe beschreibt. Insbesondere ist der Übersetzungsparameter als ein Verhältnis einer Drehzahl des Rotors des Elektromotors und einer Oszillationsrate der durch den Elektromotor angetriebenen linear-oszillierenden, Abtriebsbewegung ausgebildet. Insbesondere ist der Übersetzungsparameter abhängig von einer Ausgestaltung der Werkzeugmaschine, insbesondere des Getriebes, und in der Auswerteeinheit hinterlegt. Eine Anzahl an spezifischen Signalverläufen der Magnetfeldkenngröße oder der Stromkenngröße pro Periode der linear-oszillierenden, Abtriebsbewegung *n_{Periode}* wird vorzugsweise in Abhängigkeit des Übersetzungsparameters *g* und einer Anzahl an spezifischen Signalverläufen der Magnetfeldkenngröße oder der Stromkenngröße pro vollständiger Umdrehung des Rotors *n_{Motor}* über die Gleichung ${n}_{Periode} = \frac{{n}_{Motor}}{g}$ ermittelt. Insbesondere wird über die Anzahl an spezifischen Signalverläufen der Magnetfeldkenngröße oder der Stromkenngröße pro Periode der linear-oszillierenden, Abtriebsbewegung ein Erfassungszeitpunkt eines beliebigen spezifischen Signalverlaufs, insbesondere in einer Reihenfolge der spezifischen Signalverläufe, innerhalb einer Periode der Abtriebsbewegung ermittelt, welcher insbesondere einen Wert der Positionskenngröße darstellt. Beispielsweise wird mittels der Auswerteeinheit für jede Periode der Abtriebsbewegung jeweils ein Erfassungszeitpunkt eines ersten spezifischen Signalverlaufs innerhalb einer Periode der Abtriebsbewegung ermittelt, wobei mittels der Auswerteeinheit für jeden Erfassungszeitpunkt des ersten spezifischen Signalverlaufs innerhalb einer Periode jeweils ein erfasster Wert der physikalischen Kenngröße ermittelt wird, wobei insbesondere jeder der ermittelten Werte der physikalischen Kenngröße zur Erkennung eines Rückschlags oder eines Durchschlags herangezogen wird. Vorzugsweise werden die ermittelten Werte der physikalischen Kenngröße mittels der Auswerteeinheit subtrahiert oder dividiert, wobei eine Differenz oder ein Quotient der ermittelten Werte der physikalischen Kenngröße zur Erkennung eines Rückschlags oder eines Durchschlags mit einem, insbesondere dem vorher genannten, Grenzwert verglichen wird. Insbesondere wird mittels der Auswerteeinheit bei einer Überschreitung des Grenzwerts durch die Differenz oder den Quotienten ein Rückschlag oder ein Durchschlag erkannt. Beispielsweise, insbesondere falls die Kenngröße als eine Drehzahl des Motors ausgebildet ist, beträgt der Grenzwert zwischen 500 1/min und 5000 1/min, vorzugsweise zwischen 1000 1/min und 5000 1/min und besonders bevorzugt zwischen 2000 1/min und 5000 1/min. Alternativ oder zusätzlich ist denkbar, dass auch andere spezifische Signalverläufe und/oder ermittelte Werte der Kenngröße, welche einem Erfassungszeitpunkt anderer spezifischer Signalverläufe zuordenbar sind, mittels der Auswerteeinheit zu einer Erkennung eines Rückschlags oder eines Durchschlags herangezogen werden. Beispielsweise werden für jede Periode der Abtriebsbewegung zumindest ein Verhältnis von zwei ermittelten Werten der Kenngröße, welche einem ersten spezifischen Signalverlauf und einem zweiten oder einem anderen folgenden spezifischen Signalverlauf zuordenbar sind, ermittelt, wobei insbesondere zu einer Erkennung eines Rückschlags oder eines Durchschlags jeweils das Verhältnis für zumindest zwei zeitlich beabstandete, insbesondere Perioden der Abtriebsbewegung miteinander verglichen wird und vorzugsweise eine Differenz oder ein Quotient dieser Verhältnisse mit einem Grenzwert verglichen wird.

Ferner wird vorgeschlagen, dass in zumindest einem Verfahrensschritt die zumindest zwei zeitlich versetzt erfassten Werte der Kenngröße mittels der Auswerteeinheit zur Erkennung eines Rückschlags oder eines Durchschlags der Werkzeugmaschine derart ausgewählt werden, dass eine Differenz von Erfassungszeitpunkten der zumindest zwei Werte der Kenngröße mehr als eine Periode, zumindest im Wesentlichen genau einer Periode oder einem zumindest im Wesentlichen ganzzahligen Vielfachen einer Periode der oszillierenden, insbesondere linear-oszillierenden, Abtriebsbewegung beträgt. Es kann eine vorteilhaft schnelle Erkennung eines Rückschlags oder eines Durchschlags erreicht werden, insbesondere da eine Änderung der Kenngröße über ein längeres vorgegebenes Intervall ermittelt werden kann und so verzögerte Änderungen der Kenngröße schneller erkannt werden können. Alternativ werden in zumindest einem Verfahrensschritt die zumindest zwei zeitlich versetzt erfassten Werte der Kenngröße mittels der Auswerteeinheit zur Erkennung eines Rückschlags oder eines Durchschlags der Werkzeugmaschine derart ausgewählt, dass eine Differenz von Erfassungszeitpunkten der zumindest zwei Werte der Kenngröße mindestens mehr als ein Zeitintervall zwischen zwei aufeinanderfolgenden gleichen oder verschiedenen spezifischen Signalverläufen oder mehr als ein Zeitintervall einer vollständigen Umdrehung des Rotors beträgt. Insbesondere werden erfasste oder ermittelte Werte der Kenngröße mittels der Auswerteeinheit für jede Periode der oszillierenden, insbesondere linear-oszillierenden, Abtriebsbewegung, für jedes Zeitintervall zwischen zwei aufeinanderfolgenden gleichen oder verschiedenen spezifischen Signalverläufen oder für jedes Zeitintervall einer vollständigen Umdrehung des Rotors hinterlegt. Es ist denkbar, dass die hinterlegten Werte der Kenngröße nach einer vorbestimmten Dauer, beispielsweise nach einer Minute oder nach einer Anzahl an Perioden der linear-oszillierenden, Abtriebsbewegung oder an vollständigen Umdrehungen des Rotors, gelöscht werden. Alternativ oder zusätzlich ist denkbar, dass die hinterlegten Werte der Kenngröße zeitlich unbegrenzt in der Werkzeugmaschine und/oder einer externen Einheit hinterlegt werden.

Alternativ wird von einem Verfahren zu einer Erkennung eines Rückschlags oder eines Durchschlags einer Werkzeugmaschine, insbesondere einer Handwerkzeugmaschine, mit einer linear-oszillierenden, Abtriebsbewegung ausgegangen, wobei in zumindest einem Verfahrensschritt mittels einer Erfassungseinheit kontinuierlich oder periodisch zumindest eine physikalische Kenngröße der Werkzeugmaschine, insbesondere eines Motors, einer Antriebsstrangkomponente und/oder eines Bearbeitungswerkzeugs der Werkzeugmaschine, erfasst wird und wobei in einem weiteren Verfahrensschritt eine Erkennung eines Rückschlags oder eines Durchschlags mittels einer Auswerteeinheit in Abhängigkeit von zumindest zwei Werten der Kenngröße erfolgt, welche insbesondere zeitlich versetzt erfasst wurden.

Es wird vorgeschlagen, dass in zumindest einem Verfahrensschritt die zumindest zwei zeitlich versetzt erfassten Werte der Kenngröße mittels der Auswerteeinheit zur Erkennung eines Rückschlags oder eines Durchschlags der Werkzeugmaschine derart ausgewählt werden, dass eine Differenz von Erfassungszeitpunkten der zwei Werten der Kenngröße größer ist als ein Zeitintervall zwischen zwei nacheinander erfassten Werten der Kenngröße. Vorzugsweise werden die zwei Werte der Kenngröße nicht nacheinander erfasst. Insbesondere wird zwischen den zwei Werten der Kenngröße zumindest ein anderer Wert der Kenngröße erfasst. Bevorzugt kann eine vorteilhaft schnelle Erkennung eines Rückschlags oder eines Durchschlags der Werkzeugmaschine ermöglicht werden, insbesondere gegenüber einem Vergleich von zwei direkt aufeinanderfolgenden Werten der Kenngröße zur Erkennung eines Rückschlags oder eines Durchschlags. Vorzugsweise ist die physikalische Kenngröße als eine Drehzahl des Motors, als eine Position des Rotors des Motors, welche insbesondere über die Magnetfeldkenngröße ermittelbar ist, als die Stromkenngröße, als die Magnetfeldkenngröße und/oder als ein Steuersignal der Steuer- und/oder Regeleinheit der Werkzeugmaschine zur Kommutierung des Motors ausgebildet. Besonders bevorzugt wird die Kenngröße mittels der Erfassungseinheit in Zeitintervallen erfasst, welche jeweils höchstens 20 ms, vorzugsweise höchstens 10 ms und bevorzugt höchstens 5 ms, betragen. Vorzugsweise werden mittels der Auswerteeinheit zumindest im Wesentlichen alle erfassten Werte der Kenngröße zur Erkennung eines Rückschlags oder eines Durchschlags der Werkzeugmaschine herangezogen. Insbesondere wird jeder erfasste Wert der Kenngröße mittels der Auswerteeinheit mit zumindest einem anderen vorher erfassten Wert der Kenngröße verglichen, insbesondere subtrahiert oder dividiert, wobei ein Vergleichswert, insbesondere eine Differenz oder ein Quotient dieser Werte, zur Erkennung eines Rückschlags oder eines Durchschlags der Werkzeugmaschine mit dem Grenzwert verglichen wird. Besonders bevorzugt werden der erfasste Wert und der andere vorher erfasste Wert der Kenngröße zeitlich versetzt zueinander erfasst, wobei insbesondere zumindest ein Zeitintervall zwischen einem Erfassungszeitpunkt des erfassten Werts der Kenngröße und einem Erfassungszeitpunkt des anderen vorher erfassten Werts der Kenngröße liegt. Es kann eine vorteilhaft schnelle Erkennung eines Abfalls der Kenngröße, insbesondere der Motordrehzahl, erreicht werden. Dadurch kann eine vorteilhaft schnelle Erkennung eines Rückschlags oder eines Durchschlags der Werkzeugmaschine erreicht werden, insbesondere auch bei niedrigen Motordrehzahlen.

Des Weiteren wird vorgeschlagen, dass in zumindest einem Verfahrensschritt mittels der Auswerteeinheit eine Erkennung eines Rückschlags oder eines Durchschlags der Werkzeugmaschine in Abhängigkeit von einem Verhältnis einer Schwingungsfrequenz und einer Schwingungsamplitude eines zeitlichen Verlaufs einer Drehzahl eines Motors der Werkzeugmaschine erfolgt, welche zumindest in Abhängigkeit von den zwei Werten der Kenngröße ermittelt werden. Es kann eine vorteilhaft einfache Erkennung eines Rückschlags oder eines Durchschlags der Werkzeugmaschine erreicht werden, insbesondere da die Erkennung lediglich über eine Auswertung des zeitlichen Verlaufs der Drehzahl des Motors durchgeführt werden kann. Dadurch können zusätzliche Sensoren entfallen. Dadurch können vorteilhaft geringe Herstellungs- und Montagekosten der Werkzeugmaschine erreicht werden. Es kann eine vorteilhaft einfache Nachrüstbarkeit von älteren Werkzeugmaschinen erreicht werden, da die Erkennung lediglich über eine Erfassung und softwareseitige Auswertung der Drehzahl des Motors ermöglicht werden kann. Vorzugsweise wird die Drehzahl des Motors der Werkzeugmaschine, insbesondere der zeitliche Verlauf der Drehzahl des Motors, mittels der Erfassungseinheit, insbesondere kontinuierlich oder periodisch, erfasst. Bevorzugt werden die Schwingungsfrequenz und die Schwingungsamplitude mittels der Auswerteeinheit aus dem zeitlichen Verlauf der Drehzahl ermittelt. Insbesondere wird die Schwingungsfrequenz mittels der Auswerteeinheit durch eine Bestimmung einer Dauer einer Periode einer oszillierenden Schwingung im zeitlichen Verlauf der Drehzahl des Motors bestimmt. Insbesondere entspricht bei einem Bearbeiten eines Werkstücks o. dgl. die Schwingungsfrequenz zumindest im Wesentlichen einer Hubfrequenz des Bearbeitungswerkzeugs und/oder einer Frequenz der oszillierenden, insbesondere linear-oszillierenden, Abtriebsbewegung. Die Schwingungsfrequenz und die Schwingungsamplitude des zeitlichen Verlaufs der Drehzahl wird vorzugsweise mittels der Auswerteeinheit in Abhängigkeit von den zumindest zwei, insbesondere einer Vielzahl von, Werten der Kenngröße ermittelt. Alternativ oder zusätzlich ist denkbar, dass die Schwingungsfrequenz mittels der Auswerteeinheit über eine schnelle Fourier-Transformation des zeitlichen Verlaufs der Drehzahl bestimmt wird. Insbesondere ist die Schwingungsfrequenz in einem Leerlauf-Betrieb der Werkzeugmaschine, wobei insbesondere die Werkezugmaschine beabstandet von einem Werkstück betrieben wird, und bei einem Durchschlag oder einem Rückschlag der Werkzeugmaschine größer, insbesondere zumindest im Wesentlichen doppelt so groß, wie die Hubfrequenz des Bearbeitungswerkzeugs. Bevorzugt ist die Schwingungsamplitude in einem Leerlauf-Betrieb der Werkzeugmaschine niedriger als bei einem Bearbeitungsvorgang und als bei einem Rückschlag oder einem Durchschlag der Werkzeugmaschine. Alternativ oder zusätzlich ist denkbar, dass mittels der Auswerteeinheit in Abhängigkeit von einer Signaldifferenz zweier Werte der als Drehzahl ausgebildeten Kenngröße jeweils über eine ganze Periode der linear-oszillierenden, Abtriebsbewegung, über eine halbe Periode der linear-oszillierenden, Abtriebsbewegung und über eine viertel Periode der linear-oszillierenden, Abtriebsbewegung eine Erkennung eines Rückschlags oder eines Durchschlags erkannt wird. Insbesondere werden die Signaldifferenzen über die Zeit aufgetragen und in der Auswerteeinheit hinterlegt. Bevorzugt werden die Werte der Kenngröße zur Bestimmung der Schwingungsfrequenz in Abhängigkeit von der Positionskenngröße ermittelt, welche insbesondere einen Erfassungszeitpunkt der Werte der Kenngröße einer Position innerhalb einer Periode der linear-oszillierenden, Abtriebsbewegung zuordnet. Bei der Erkennung eines Rückschlags oder eines Durchschlags mittels der Signaldifferenzen der Werte der Kenngröße über eine ganze Periode, eine halbe Periode und eine viertel Periode der linear-oszillierenden, Abtriebsbewegung wird bevorzugt für jede Signaldifferenz jeweils ein Grenzwert vorgegeben, wobei die Signaldifferenzen über eine ganze Periode und eine halbe Periode zumindest im Wesentlichen null betragen und die Signaldifferenz über eine viertel Periode zumindest im Wesentlichen einem lokalen Maximum und/oder lokalen Minimum des zeitlichen Verlaufs der Drehzahldifferenz über eine viertel Periode entspricht. Es ist auch denkbar, dass mittels der Auswerteeinheit in Abhängigkeit von einer ermittelten Dauer der ganzen Periode, der halben Periode und/oder der viertel Periode der linear-oszillierenden, Abtriebsbewegung eine Erkennung eines Rückschlags oder eines Durchschlags erfolgt, insbesondere über einen Vergleich mit einer vorher ermittelten Dauer einer entsprechenden Periodenlänge.

Zudem wird vorgeschlagen, dass in zumindest einem Verfahrensschritt mittels einer Bedienerschnittstelle eine Form und/oder eine Art eines auszugebenden elektronischen Steuersignals vorgegeben wird, wobei in zumindest einem weiteren Verfahrensschritt bei einer Erkennung eines Rückschlags oder eines Durchschlags der Werkzeugmaschine mittels der Auswerteeinheit das elektronische Steuersignal ausgegeben wird. Es kann vorteilhaft eine Reaktion der Werkzeugmaschine auf eine Erkennung eines Rückschlags oder eines Durchschlags der Werkzeugmaschine anwendungsspezifisch und/oder benutzerspezifisch angepasst werden. Dadurch können eine vorteilhaft hohe Benutzerfreundlichkeit und eine vorteilhaft hohe Flexibilität ermöglicht werden. Beispielsweise wird mittels der Bedienerschnittstelle eine Anpassung der Reaktion der Werkzeugmaschine auf eine Erkennung eines Rückschlags oder eines Durchschlags der Werkzeugmaschine in Abhängigkeit von einem zu bearbeitenden Werkstück oder einer Bearbeitungslage der Werkzeugmaschine angepasst. Insbesondere wird durch die Form und/oder die Art des auszugebenden elektronischen Steuersignals eine Reaktion der Werkzugmaschine auf die Erkennung des Rückschlags oder des Durchschlags bestimmt. Vorzugsweise wird durch eine Einstellung der Form und/oder der Art des elektronischen Steuersignals über die Bedienerschnittstelle eine Reaktion der Werkzugmaschine auf die Erkennung des Rückschlags oder des Durchschlags vorgegeben. Vorzugsweise weist die Auswerteeinheit eine Mehrzahl von voneinander verschiedenen elektronischen Steuersignalen auf, welche sich insbesondere in der Form und/oder der Art unterscheiden, wobei in zumindest einem Verfahrensschritt mittels der Bedienerschnittstelle ein über die Auswerteeinheit bei einer Erkennung eines Rückschlags oder eines Durchschlags auszugebendes elektronisches Steuersignal ausgewählt wird. Außerdem wird eine Vorrichtung zu einem Durchführen eines erfindungsgemäßen Verfahrens zu einer Erkennung eines Rückschlags oder eines Durchschlags einer Handwerkzeugmaschine, mit einer linear-oszillierenden, Abtriebsbewegung, mit zumindest einer, insbesondere der vorher genannten, Erfassungseinheit und mit zumindest einer, insbesondere der vorher genannten, Auswerteeinheit, vorgeschlagen.

Vorzugsweise ist die Vorrichtung, insbesondere die Erfassungseinheit und die Auswerteeinheit, als Teil der Werkzeugmaschine ausgebildet und insbesondere innerhalb oder an einem Gehäuse der Werkzeugmaschine angeordnet. Die Erfassungseinheit ist vorzugsweise dazu vorgesehen, die physikalische Kenngröße und/oder die Positionskenngröße zu erfassen. Unter "vorgesehen" soll insbesondere speziell programmiert, speziell ausgelegt und/oder speziell ausgestattet verstanden werden. Darunter, dass ein Objekt, insbesondere die Erfassungseinheit, zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Es ist auch denkbar, dass die Auswerteeinheit dazu vorgesehen ist, die Positionskenngröße aus einer mittels der Erfassungseinheit erfassten Kenngröße zu ermitteln. Die Erfassungseinheit umfasst zumindest ein Sensorelement zu einer Erfassung der Kenngröße. In einer bevorzugten Ausgestaltung umfasst die Erfassungsvorrichtung zumindest eine Hall-Sonde, welche an dem Motor der Werkzeugmaschine angeordnet ist oder als Teil des Motors ausgebildet ist. Bevorzugt ist die Hall-Sonde dazu vorgesehen, die Magnetfeldkenngröße des Motors zu erfassen. Insbesondere ist die Hall-Sonde dazu vorgesehen, ein über eine Bewegung des am Rotor befestigten Magneten generiertes veränderliches Magnetfeld zu erfassen. Insbesondere ist die Hall-Sonde dazu vorgesehen, insbesondere in Abhängigkeit des Magnetfelds in einem Nahbereich der Hall-Sonde, eine elektrische Spannung auszugeben. Bevorzugt ist die Hall-Sonde zu einer kontinuierlichen Erfassung der Magnetfeldkenngröße vorgesehen, wobei insbesondere ein zeitlicher Verlauf der elektrischen Spannung ausgegeben wird. In einer alternativen Ausgestaltung umfasst die Erfassungseinheit zumindest ein Sensorelement zu einer Erfassung der Stromkenngröße des Elektromotors. Besonders bevorzugt umfasst die Erfassungseinheit zumindest ein, insbesondere weiteres, Sensorelement zu einer Erfassung einer Drehzahl des Motors. Bevorzugt umfasst die Erfassungseinheit zumindest ein, insbesondere weiteres oder anderes, Sensorelement zu einer Erfassung einer Lage der Werkzeugmaschine im Raum und/oder einer Ausrichtung der Werkzeugmaschine im Raum, wie beispielsweise ein Gyroskop, einen Sensor als Teil eines Positionsbestimmungssystems, ein Funksystem o. dgl. Besonders bevorzugt ist die Auswerteeinheit dazu vorgesehen, in Abhängigkeit von einer mittels der Erfassungseinheit erfassten Position, Lage und/oder Drehzahl den Grenzwert zur Erkennung eines Rückschlags oder eines Durchschlags anzupassen. Es ist denkbar, dass der Grenzwert mittels eines zumindest teilweise über die Auswerteeinheit oder die Steuer- und/oder Regeleinheit implementierten neuronalen Netzwerks angepasst wird. Unter einem "neuronalen Netzwerk" soll insbesondere ein Netzwerk aus mehreren Recheneinheiten, insbesondere Auswerteeinheiten und/oder Steuer- und/oder Regeleinheiten mehrerer, insbesondere informationstechnisch, zumindest zeitweise miteinander verbundener Werkzeugmaschinen, verstanden werden, welche zu einer Rechenfunktion, wie beispielsweise zu Berechnungen oder zu einer Auswertung von Daten, miteinander verbunden werden, wobei insbesondere ein Ergebnis der Rechenfunktion innerhalb des Netzwerks auf allen das Netzwerk bildende Geräte hinterlegt und/oder an alle das Netzwerk bildende Geräte übertragen wird. Insbesondere werden mittels des neuronalen Netzwerks, insbesondere alle, über die Erfassungseinheit erfassten Signale und/oder Daten zusammengeführt und ausgewertet, wobei vorzugsweise ein maschinelles Lernverfahren angewandt wird. Unter einem "maschinellen Lernverfahren" soll insbesondere ein durch eine Recheneinheit, insbesondere die Auswerteeinheit und/oder die Steuer- und/oder Regeleinheit, ausgeführtes und/oder ausführbares Verfahren verstanden werden, wobei die Recheneinheit erfasste oder vorgegebene Daten, wie beispielsweise in der Vergangenheit erfasste Vorgänge bei einem Rückschlag oder einem Durchschlag, auswertet und ein Vorgehen oder ein Algorithmus für zukünftige Anwendungen oder Situationen in Abhängigkeit von einer Auswertung der Daten anpasst. Insbesondere ist das neuronale Netzwerk dazu vorgesehen, insbesondere mittels dem maschinellen Lernverfahren, vergangene Vorgänge zu einer Erkennung von einem Rückschlag oder einem Durchschlag hinsichtlich einer, beispielsweise vom Benutzer eingegebenen, Richtigkeit einer Erkennung auszuwerten und einen über die Auswerteeinheit angewandten Algorithmus zur Erkennung eines Rückschlags oder eines Durchschlags und/oder den Grenzwert für zukünftige Vorgänge anzupassen. Beispielsweise ist die Auswerteeinheit dazu vorgesehen, bei einem Überkopfarbeiten mit der Werkzeugmaschine, was insbesondere über die Erfassungseinheit erfasst wird, den Grenzwert relativ zu einem Arbeiten beispielsweise in einer Hüftposition zu erhöhen, insbesondere da beim Überkopfarbeiten generell von einem leichteren Halt durch den Benutzer auszugehen ist. Vorzugsweise ist das, insbesondere ein, ein weiteres oder ein anderes, Sensorelement der Erfassungseinheit dazu vorgesehen, eine Beschleunigung der Werkzeugmaschine im Raum zu erfassen. Besonders bevorzugt ist die Hall-Sonde oder ein anderes Sensorelement der Erfassungseinheit dazu vorgesehen, ein Magnetfeld des Elektromotors im Raum zu erfassen.

Vorzugsweise ist die Auswerteeinheit dazu vorgesehen, die erfasste Kenngröße und/oder die Positionskenngröße auszuwerten. Besonders bevorzugt ist die Auswerteeinheit dazu vorgesehen, insbesondere in Abhängigkeit von den zwei Werten der Kenngröße und der Positionskenngröße, einen Rückschlag oder einen Durchschlag der Werkzeugmaschine zu erkennen. Unter einer "Auswerteeinheit" soll insbesondere eine Einheit mit zumindest einer Auswerteelektronik verstanden werden, die dazu vorgesehen ist, elektrische und/oder elektronische Daten auszuwerten. Bevorzugt umfasst die Auswerteeinheit zumindest einen Algorithmus oder ein elektronisches Lernverfahren zu einer Verarbeitung von elektrischen und/oder elektronischen Daten, wobei der Algorithmus oder das elektronische Lernverfahren dazu vorgesehen sind, in Abhängigkeit von der Auswerteeinheit übermittelten Daten einen Rückschlag oder einen Durchschlag der Werkzeugmaschine zu erkennen. Unter einer "Auswerteelektronik" soll insbesondere eine Einheit mit einer Prozessoreinheit und mit einer Speichereinheit sowie mit einem in der Speichereinheit gespeicherten Betriebsprogramm verstanden werden. Vorzugsweise ist die Prozessoreinheit als ein Prozessor, als ein FPGA, als ein Mikrocontroller o. dgl. ausgebildet.

Der Motor der Werkzeugmaschine ist vorzugsweise als ein Elektromotor, insbesondere als ein bürstenloser Elektromotor und besonders bevorzugt als ein bürstenloser Gleichstrommotor ausgebildet. Der Motor weist bevorzugt eine lineare oder rotierende Antriebsbewegung auf, wobei über die Antriebsbewegung die linear-oszillierende Abtriebsbewegung angetrieben wird. Die Werkzeugmaschine, insbesondere der Motor, umfasst bevorzugt zumindest ein Getriebe zu einer Kraftübertragung zwischen der Antriebsbewegung und der Abtriebsbewegung und/oder einer Bewegung des Bearbeitungswerkzeugs. Vorzugsweise weist das Getriebe der Werkzeugmaschine den Übersetzungsparameter auf und/oder ist derart ausgebildet, dass eine Übertragung und/oder Übersetzung einer Bewegung von dem Motor auf das Bearbeitungswerkzeug gemäß dem Übersetzungsparameter erfolgt. Insbesondere ist die Werkzeugmaschine in einer bevorzugten Ausgestaltung dazu vorgesehen, das Bearbeitungswerkzeug mit einem Pendelhub anzutreiben. Beispielsweise umfasst die Werkzeugmaschine einen Oszillationsantrieb, insbesondere zur Realisierung der linear-oszillierenden, Abtriebsbewegung. Beispielsweise umfasst die Werkzeugmaschine eine Hubstange zum Abtrieb der Bewegung über das Bearbeitungswerkzeug. Beispielsweise ist die Werkzeugmaschine als eine Säbelsäge, als ein OMT-Werkzeug (Oszillation Multi-Tool), als eine Stichsäge, als ein elektrischer Fuchsschwanz o. dgl. ausgebildet. Die Werkzeugmaschine umfasst zumindest eine, insbesondere die vorher genannte, Steuer- und/oder Regeleinheit zu einem Steuern und/oder Regeln des Motors, der Erfassungseinheit, der Bedienerschnittstelle, der Ausgabeeinheit und/oder der Auswerteeinheit. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Es ist denkbar, dass die Steuer- und/oder Regeleinheit und die Auswerteeinheit einteilig ausgebildet sind, wobei insbesondere die Steuer- und/oder Regeleinheit und die Auswerteeinheit zusammen auf einer gemeinsamen Elektronikplatine angeordnet sind und/oder gemeinsam über eine Prozessoreinheit, beispielsweise als ein Prozessor, als ein FPGA, als ein Mikrocontroller o. dgl., ausgebildet sind. Besonders bevorzugt ist die Steuer- und/oder Regeleinheit dazu vorgesehen, insbesondere bei einer Erkennung eines Rückschlags oder eines Durchschlags mittels der Auswerteeinheit, zumindest den Motor in Abhängigkeit von dem, insbesondere über die Auswerteeinheit ausgegebenen, Steuersignal zu steuern und/oder zu regeln. Insbesondere umfasst die Werkzeugmaschine die Ausgabeeinheit. Bevorzugt ist die Ausgabeeinheit dazu vorgesehen, insbesondere in Abhängigkeit von dem Steuersignal zumindest ein haptisches, akustisches und/oder visuelles Signal auszugeben, beispielsweise zu einer Warnung des Benutzers der Werkzeugmaschine oder anderen Personen in einem Umfeld der Werkzeugmaschine. Beispielsweise ist die Ausgabeeinheit als ein Display, als eine LED, als eine Lampe, als ein Vibrationsgenerator, als ein Aktuator, insbesondere zu einer Bewegung zumindest eines Bauteils der Werkzeugmaschine, als ein Lautsprecher o. dgl. ausgebildet. Es ist auch denkbar, dass die Steuer- und/oder Regeleinheit dazu vorgesehen ist, in Abhängigkeit von dem Steuersignal, insbesondere bei einer Erkennung eines Rückschlags oder eines Durchschlags, zumindest einen Aktuator der Werkzeugmaschine zu einem Bewegen, insbesondere Ausfahren, Hochklappen o.dgl., eines Schutzelements anzusteuern. Insbesondere ist das Schutzelement dazu vorgesehen, den Benutzer beim Rückschlag oder Durchschlag vor Verletzungen zu schützen. Beispielsweise ist das Schutzelement als ein Schutzhebel, als eine Blockierung des Bearbeitungswerkzeugs, als eine Abdeckung o. dgl. ausgebildet.

Durch die erfindungsgemäße Ausgestaltung der Vorrichtung kann eine vorteilhaft hohe Benutzersicherheit bei einer Verwendung der Werkzeugmaschine erreicht werden, insbesondere da eine vorteilhaft schnelle Erkennung eines Rückschlags oder eines Durchschlags der Werkzeugmaschine ermöglicht werden kann. Zudem wird vorgeschlagen, dass die Erfassungseinheit dazu vorgesehen ist, zumindest einen Wert einer als Position, Geschwindigkeit und/oder Beschleunigung ausgebildeten Positionskenngröße der linear-oszillierenden, Abtriebsbewegung der Werkzeugmaschine zumindest im Wesentlichen direkt an einem Bearbeitungswerkzeug und/oder einem Abtriebselement der Werkzeugmaschine zu erfassen, wobei sich der zumindest eine Wert der Positionskenngröße bei der Abtriebsbewegung, insbesondere genau einmal, periodisch wiederholt. Es kann eine vorteilhaft direkte und einfache Erfassung der Positionskenngröße ermöglicht werden. Es können rechenaufwändige Auswertungen zu einem Ermitteln der Positionskenngröße entfallen. Dadurch kann eine vorteilhaft einfache und kostengünstige Ausgestaltung der Auswerteeinheit ermöglicht werden. Unter "im Wesentlichen direkt" soll insbesondere verstanden werden, dass die Positionskenngröße mittels der Erfassungseinheit über eine Messung einer Eigenschaft, insbesondere eine Position, eine Geschwindigkeit und/oder eine Beschleunigung, des Bearbeitungswerkzeugs erfasst wird. Vorzugsweise umfasst die Erfassungseinheit zumindest ein Sensorelement zu einer Erfassung der Positionskenngröße. Insbesondere ist das Sensorelement an dem Bearbeitungswerkzeug oder in einem Nahbereich des Bearbeitungswerkzeugs angeordnet. Unter einem "Nahbereich" soll insbesondere ein Bereich eines Objekts, insbesondere des Bearbeitungswerkzeugs, verstanden werden, welcher sich innerhalb von höchstens 5 cm, vorzugsweise höchstens 3 cm und bevorzugt höchstens 2 cm, um das Objekt erstreckt. Bevorzugt ist das, insbesondere ein, ein weiteres oder ein anderes, Sensorelement der Erfassungseinheit dazu vorgesehen, die als Position, Geschwindigkeit und/oder Beschleunigung ausgebildete Positionskenngröße der linear-oszillierenden, Abtriebsbewegung der Werkzeugmaschine zumindest im Wesentlichen direkt an dem Bearbeitungswerkzeug zu erfassen. Beispielsweise ist das Sensorelement als eine Kamera, insbesondere mit einer Bildauswertung, als eine Laserschranke o. dgl., insbesondere zu einem Erfassen eines Durchgangs eines Referenzpunkts, als ein Beschleunigungssensor, insbesondere ein Gyroskop, ein piezoelektrischer Beschleunigungssensor o. dgl., als ein Kontaktzähler oder als ein anderes, einem Fachmann bekanntes Sensorelement ausgebildet. Es ist auch denkbar, dass die Erfassungseinheit, insbesondere das Sensorelement, dazu vorgesehen ist, die physikalische Kenngröße zu einem Erkennen eines Rückschlags oder eines Durchschlags zumindest im Wesentlichen direkt an dem Bearbeitungswerkzeug zu erfassen, beispielsweise über eine Erfassung einer ruckartigen Änderung der Position, der Geschwindigkeit und/oder der Beschleunigung des Bearbeitungswerkzeugs und/oder einer Änderung eines gewohnten zeitlichen Verlaufs der erfassten Position, Geschwindigkeit und/oder Beschleunigung, insbesondere in Abhängigkeit von der Positionskenngröße. Bevorzugt ist das Abtriebselement als ein, die Abtriebsbewegung von dem Getriebe oder dem Motor an das Bearbeitungswerkzeug übertragendes Element, wie beispielsweise eine Hubstange, ausgebildet.

Zusätzlich wird eine Handwerkzeugmaschine, mit einer linear-oszillierenden, Abtriebsbewegung und mit einer erfindungsgemäßen Vorrichtung vorgeschlagen. Vorzugsweise ist die Vorrichtung als Teil der Werkzeugmaschine ausgebildet oder ist innerhalb oder an der Werkzeugmaschine angeordnet.

Durch die erfindungsgemäße Ausgestaltung der Werkzeugmaschine kann eine vorteilhaft hohe Benutzersicherheit erreicht werden, insbesondere da eine vorteilhaft schnelle Erkennung eines Rückschlags oder eines Durchschlags der Werkzeugmaschine ermöglicht werden kann.

Das erfindungsgemäße Verfahren, die erfindungsgemäße Vorrichtung und/oder die erfindungsgemäße Werkzeugmaschine sollen/soll hierbei nicht auf die oben beschriebene Anwendung und Ausführungsform beschränkt sein. Insbesondere können/kann das erfindungsgemäße Verfahren, die erfindungsgemäße Vorrichtung und/oder die erfindungsgemäße Werkzeugmaschine zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind vier Ausführungsbeispiele der Erfindung dargestellt. Die Zeichnungen, die Beschreibung und die Ansprüche enthalten zahlreiche Merkmale in Kombination. Der Schutzumfang der Erfindung wird durch die anhängenden Patentansprüche definiert.

Es zeigen:
- Fig. 1: eine schematische Darstellung einer erfindungsgemäßen Werkzeugmaschine mit einer erfindungsgemäßen Vorrichtung zu einem Durchführen eines erfindungsgemäßen Verfahrens zu einer Erkennung eines Rückschlags oder eines Durchschlags der Werkzeugmaschine,
- Fig. 2: eine beispielhafte Messung eines zeitlichen Verlaufs einer Drehzahl eines Motors der erfindungsgemäßen Werkzeugmaschine,
- Fig. 3: eine beispielhafte Messung eines zeitlichen Verlaufs einer Drehzahl eines Motors der erfindungsgemäßen Werkzeugmaschine bei einem Rückschlag der Werkzeugmaschine,
- Fig. 4: eine schematische Darstellung eines beispielhaften Ablaufs des erfindungsgemäßen Verfahrens zu einer Erkennung eines Rückschlags oder eines Durchschlags der erfindungsgemäßen Werkzeugmaschine,
- Fig. 5: eine schematische Darstellung einer alternativen Ausgestaltung einer erfindungsgemäßen Werkzeugmaschine mit einer erfindungsgemäßen Vorrichtung zu einem Durchführen eines erfindungsgemäßen Verfahrens zu einer Erkennung eines Rückschlags oder eines Durchschlags der Werkzeugmaschine,
- Fig. 6: eine beispielhafte Messung eines zeitlichen Verlaufs einer Magnetfeldkenngröße eines Elektromotors der erfindungsgemäßen Werkzeugmaschine,
- Fig. 7: eine schematische Darstellung eines beispielhaften Ablaufs einer alternativen Ausgestaltung des erfindungsgemäßen Verfahrens zu einer Erkennung eines Rückschlags oder eines Durchschlags der erfindungsgemäßen Werkzeugmaschine,
- Fig. 8: eine beispielhafte Messung von zeitlichen Verläufen einer Drehzahl eines Motors der erfindungsgemäßen Werkzeugmaschine, eines ermittelten Verhältnisses zur Erkennung eines Rückschlags oder eines Durchschlags der erfindungsgemäßen Werkzeugmaschine und eines ausgegebenen Steuersignals bei einem Rückschlag der Werkzeugmaschine,
- Fig. 9: beispielhafte Messungen eines zeitlichen Verlaufs einer Drehzahl eines Motors der erfindungsgemäßen Werkzeugmaschine in einem Leerlauf-Betrieb, bei einem Rückschlag der Werkzeugmaschine und bei einem Bearbeitungsvorgang an einem Werkstück,
- Fig. 10: eine beispielhafte Messung eines zeitlichen Verlaufs einer Drehzahl eines Motors der erfindungsgemäßen Werkzeugmaschine bei einem Rückschlag der Werkzeugmaschine mit mehreren Erfassungsintervallen einer Erfassungseinheit einer erfindungsgemäßen Vorrichtung zu einer Erkennung eines Rückschlags oder eines Durchschlags der Werkzeugmaschine und
- Fig. 11: eine schematische Darstellung eines beispielhaften Ablaufs einer weiteren alternativen Ausgestaltung des erfindungsgemäßen Verfahrens zu einer Erkennung eines Rückschlags oder eines Durchschlags der erfindungsgemäßen Werkzeugmaschine.

### Beschreibung der Ausführungsbeispiele

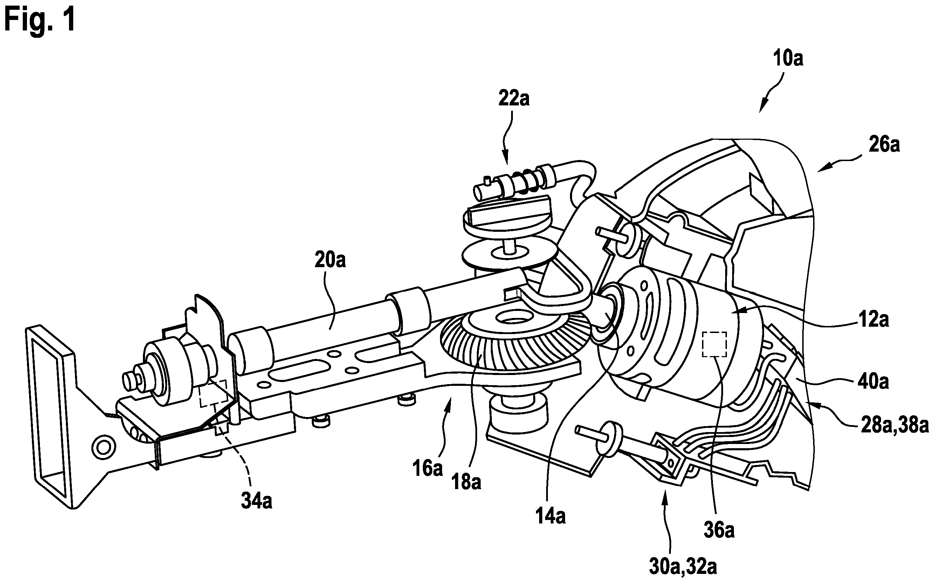

In Figur 1 ist eine als elektrische Handwerkzeugmaschine, insbesondere als eine Säbelsäge, ausgebildete Werkzeugmaschine 10a gezeigt. Die Werkzeugmaschine 10a umfasst einen Elektromotor 12a, welcher als ein bürstenloser Gleichstrommotor ausgebildet ist. Der Elektromotor 12a ist dazu vorgesehen, über eine geeignete Kommutierung einen Rotor des Elektromotors 12a (in Figur 1 nicht gezeigt) in Rotation zu versetzen. Über die Rotation des Rotors dreht sich eine Antriebswelle 14a des Elektromotors 12a. Die Werkzeugmaschine 10a umfasst ein Getriebe 16a. Vorzugsweise ist der Elektromotor 12a zusammen mit dem Getriebe 16a als ein Oszillationsantrieb ausgebildet. Das Getriebe 16a umfasst ein Getrieberad 18a, welches dazu vorgesehen ist, eine Rotation der Antriebswelle 14a in eine Hubbewegung einer Hubstange 20a der Werkzeugmaschine 10a umzuwandeln. Insbesondere wird die Hubstange 20a über eine Rotation des Getrieberads 18a in eine linear-oszillierende Abtriebsbewegung versetzt. Ein Bearbeitungswerkzeug der Werkzeugmaschine 10a, welches insbesondere in Figur 1 nicht gezeigt ist, ist an der Hubstange 20a befestigt und wird über die Hubbewegung entlang einer zumindest im Wesentlichen geraden Strecke hin und her bewegt. Das Bearbeitungswerkzeug der Werkzeugmaschine 10a ist vorzugsweise als ein Sägeblatt ausgebildet. Es sind aber auch andere Ausgestaltungen der Werkzeugmaschine 10a, insbesondere des Elektromotors 12a der Werkzeugmaschine 10a, des Getriebes 16a, der Abtriebsbewegung und/oder des Bearbeitungswerkzeugs, denkbar. Beispielsweise ist eine von einem Elektromotor oder einem bürstenlosen Gleichstrommotor verschiedene Ausgestaltung des Motors 12a der Werkzeugmaschine 10a denkbar. Insbesondere ist eine von einer Säbelsäge verschiedene Ausgestaltung der Werkzeugmaschine 10a denkbar, beispielsweise ein OMT-Werkzeug, eine Stichsäge o. dgl. Beispielsweise ist eine, insbesondere nicht-lineare, oszillierende Abtriebsbewegung der Werkzeugmaschine 10a denkbar, beispielsweise eine pendelartig schwingende Abtriebsbewegung eines OMT-Werkzeugs.

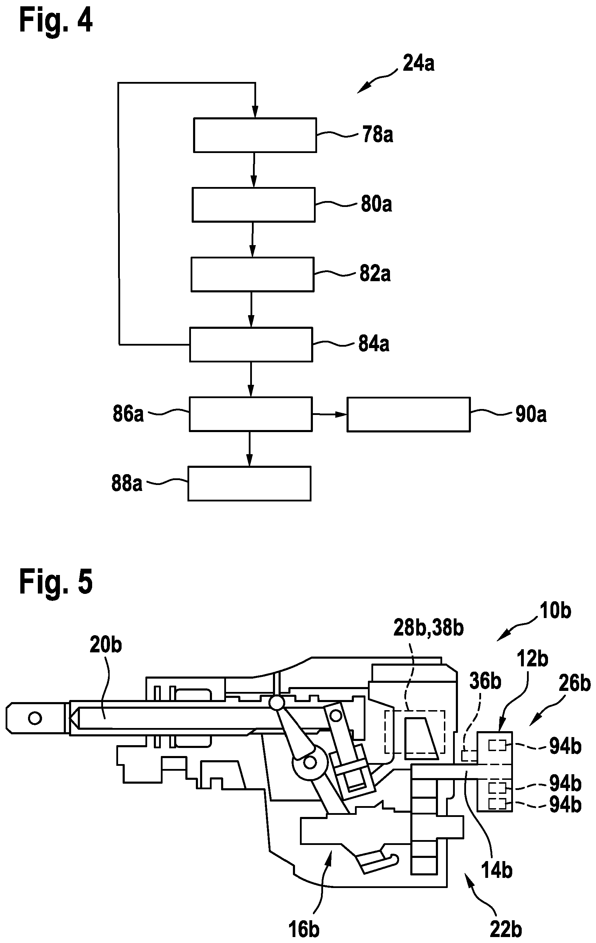

Die Werkzeugmaschine 10a umfasst eine Vorrichtung 22a zu einem Durchführen eines Verfahrens 24a (siehe Figur 4) zu einer Erkennung eines Rückschlags oder eines Durchschlags der Werkzeugmaschine 10a. Die Vorrichtung 22a umfasst eine Erfassungseinheit 26a zu einer Erfassung einer physikalischen Kenngröße der Werkzeugmaschine 10a, insbesondere des Motors 12a, einer Antriebsstrangkomponente und/oder des Bearbeitungswerkzeugs der Werkzeugmaschine 10a, und eine Auswerteeinheit 28a zu einer Erkennung eines Rückschlags oder eines Durchschlags der Werkzeugmaschine 10a in Abhängigkeit von zumindest zwei zeitlich versetzt erfassten Werten der Kenngröße der Werkzeugmaschine 10a, wobei den zumindest zwei Werten der Kenngröße jeweils ein zumindest im Wesentlichen identischer Wert einer diskreten Positionskenngröße der oszillierenden, insbesondere linear-oszillierenden, Abtriebsbewegung der Werkzeugmaschine 10a zugeordnet ist. Die Vorrichtung 22a umfasst eine Bedienerschnittstelle 30a, die zumindest zu einer Einstellung einer Form und/oder einer Art eines über die Auswerteeinheit 28a bei einer Erkennung eines Rückschlags oder eines Durchschlags auszugebenden elektronischen Steuersignals vorgesehen ist. Bevorzugt ist die Bedienerschnittstelle 30a dazu vorgesehen, eine Form und/oder eine Art des über die Auswerteeinheit 28a bei einer Erkennung eines Rückschlags oder eines Durchschlags auszugebenden elektronischen Steuersignals aus einer Mehrzahl an verschiedenen vorgegebenen Steuersignalen auszuwählen. Insbesondere ist die Bedienerschnittstelle 30a als ein Drehschalter ausgebildet und insbesondere in der Figur 1 nicht im Detail gezeigt. Es sind aber auch andere Ausgestaltungen der Bedienerschnittstelle 30a denkbar, beispielsweise als ein Kippschalter, als ein Bedienfeld, als Touch-Display und/oder als Teil einer Bedieneinheit der Werkzeugmaschine 10a. Die Werkzeugmaschine 10a umfasst eine als Lautsprecher ausgebildete Ausgabeeinheit 32a. Die Auswerteeinheit 28a ist dazu vorgesehen, bei einer Ausgabe des Steuersignals, die Ausgabeeinheit 32a anzusteuern. Vorzugsweise ist die Ausgabeeinheit 32a dazu vorgesehen, insbesondere bei einer Erkennung eines Rückschlags oder eines Durchschlags durch die Auswerteeinheit 28a, in Abhängigkeit von dem Steuersignal zumindest ein akustisches Signal, insbesondere einen Signalton, ausgegeben, vorzugsweise zu einer Warnung eines Benutzers der Werkzeugmaschine 10a und/oder anderer Personen in einem Umfeld der Werkzeugmaschine 10a. Es sind aber auch andere Ausgestaltungen der Ausgabeeinheit 32a denkbar, beispielsweise als eine LED, als ein Display zur Ausgabe eines visuellen Signals und/oder als ein Vibrationsgenerator zur Ausgabe eines haptischen Signals.

Die Erfassungseinheit 26a umfasst mindestens ein Sensorelement 36a, welches am Elektromotor 12a angeordnet ist und zu einer Erfassung der als Drehzahl des Elektromotors 12a ausgebildeten physikalischen Kenngröße vorgesehen ist. Das Sensorelement 36a ist als ein induktiver Impulsgeber ausgebildet und insbesondere dazu vorgesehen, die Bewegung des Rotors zu erfassen und darüber die Drehzahl auszugeben. Es sind aber auch andere Ausgestaltungen des Sensorelements 36a zu einer Erfassung der als Drehzahl des Elektromotors 12a ausgebildeten Kenngröße denkbar, wobei das Sensorelement 36a beispielsweise als eine Kamera, als eine Hall-Sonde zu einer Erfassung einer Magnetfeldkenngröße des rotierenden Elektromotors 12a, als Amperemeter zu einer Erfassung eines periodischen Steuerstroms des Elektromotors 12a o. dgl. ausgebildet ist. Die Erfassungseinheit 26a ist dazu vorgesehen, zumindest einen Wert der als Position, Geschwindigkeit und/oder Beschleunigung ausgebildeten Positionskenngröße der linear-oszillierenden Abtriebsbewegung der Werkzeugmaschine 10a zumindest im Wesentlichen direkt an einem Bearbeitungswerkzeug und/oder an einem Abtriebselement der Werkzeugmaschine 10a zu erfassen, wobei sich der zumindest eine Wert der Positionskenngröße bei der Abtriebsbewegung genau einmal, insbesondere innerhalb einer Periode der linear-oszillierenden Abtriebsbewegung, periodisch wiederholt. Die Erfassungseinheit 26a umfasst ein weiteres Sensorelement 34a insbesondere zur Erfassung der als Geschwindigkeit, insbesondere Geschwindigkeitsvektor, der Hubstange 20a ausgebildeten Positionskenngröße der Abtriebsbewegung. Bei der oszillierenden Hin-und-Her-Bewegung der Hubstange 20a wird dabei für jede Periode der Abtriebsbewegung jeder Wert der Positionskenngröße, welcher sich insbesondere von null unterscheidet, genau einmal erfasst, insbesondere mit Berücksichtigung eines Betrags und einer Richtung der Geschwindigkeit der Hubstange. Das weitere Sensorelement 34a ist in einem Nahbereich der Hubstange 20a angeordnet. Das weitere Sensorelement 34a ist als ein Geschwindigkeitssensor, insbesondere als ein optischer Sensor, als ein Kontaktsensor, als ein magnetischer Sensor, wie beispielsweise ein Hall-Sensor, ein Reed-Sensor o. dgl., zur Erfassung eines durch die Geschwindigkeit der Hubstange veränderlichen Magnetfelds, als ein AMR-Sensor, als ein GMR-Sensor o. dgl., ausgebildet.

Die Auswerteeinheit 28a ist als Teil einer Steuer- und/oder Regeleinheit 38a der Werkzeugmaschine 10a ausgebildet. Die Steuer- und/oder Regeleinheit 38a ist zu einem Steuern und/oder Regeln des Elektromotors 12a, der Erfassungseinheit 26a, der Bedienerschnittstelle 30a und der Ausgabeeinheit 32a vorgesehen. Die Steuer- und/oder Regeleinheit 38a und die Auswerteeinheit 28a umfassen eine Elektronikplatine 40a, auf der eine als Prozessor ausgebildete Prozessoreinheit (in Figur 1 nicht gezeigt) und eine als elektronischer Datenspeicher ausgebildete Speichereinheit (in Figur 1 nicht gezeigt) angeordnet sind. Die Prozessoreinheit ist insbesondere zu einem Ausführen eines auf der Speichereinheit hinterlegten Algorithmus zur Erkennung eines Rückschlags oder eines Durchschlags der Werkzeugmaschine 10a in Abhängigkeit von der erfassten Kenngröße und der erfassten Positionskenngröße vorgesehen. Besonders bevorzugt ist die Steuer- und/oder Regeleinheit 38a dazu vorgesehen, insbesondere bei einer Erkennung eines Rückschlags oder eines Durchschlags der Werkzeugmaschine 10a, zumindest den Elektromotor 12a über das Steuersignal zu steuern und/oder zu regeln. Es ist auch denkbar, dass die Steuer- und/oder Regeleinheit 38a dazu vorgesehen ist, in Abhängigkeit von dem Steuersignal, insbesondere bei einer Erkennung eines Rückschlags oder eines Durchschlags der Werkzeugmaschine 10a, zumindest einen Aktuator der Werkzeugmaschine 10a zu einem Bewegen, insbesondere Ausfahren, Hochklappen o.dgl., eines Schutzelements anzusteuern (in Figur 1 nicht gezeigt). Insbesondere ist das Schutzelement dazu vorgesehen, den Benutzer beim Rückschlag oder Durchschlag vor Verletzungen zu schützen. Beispielsweise ist das Schutzelement als ein Schutzhebel, als eine Blockierung des Bearbeitungswerkzeugs, als eine Abdeckung o. dgl. ausgebildet. Es sind auch andere Ausgestaltungen der Auswerteeinheit 28a denkbar, wobei beispielsweise die Auswerteeinheit 28a getrennt und/oder beabstandet von der Steuer- und/oder Regeleinheit 38a ausgebildet/angeordnet ist. Insbesondere ist die Auswerteeinheit 28a dazu vorgesehen, das Steuersignal bei einer Erkennung eines Rückschlags oder eines Durchschlags der Werkzeugmaschine an die Steuer- und/oder Regeleinheit 38a auszugeben, insbesondere zu übertragen.

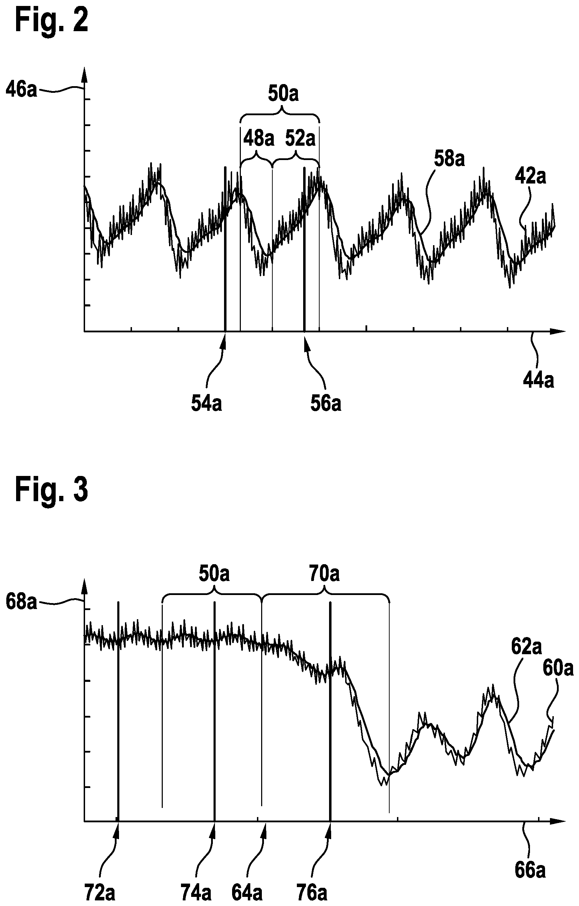

In Figur 2 ist ein mittels der Erfassungseinheit 26a, insbesondere dem Sensorelement 36a, erfasster beispielhafter zeitlicher Verlauf 42a der als Drehzahl des Elektromotors 12a ausgebildeten Kenngröße während eines Sägevorgangs der Werkzeugmaschine 10a gezeigt. Durch die linear-oszillierende Abtriebsbewegung und einem sich mit der Richtung der Hubbewegung ändernden Kraftübertrag zwischen dem an der Hubstange 20a angeordneten Bearbeitungswerkzeug und einem Werkstück weist der zeitliche Verlauf 42a der Kenngröße eine sich periodisch ändernde, insbesondere oszillierende, Form auf, welche sich insbesondere von einer Sinus- oder Kosinus-Funktion unterscheidet. Eine Abszisse 44a des in Figur 2 gezeigten Graphen gibt die Zeit an. Eine Ordinate 46a gibt die Drehzahl des Elektromotors 12a an. In einem ersten Abschnitt 48a einer Periode 50a der linear-oszillierenden Abtriebsbewegung im zeitlichen Verlauf 42a der Kenngröße erfolgt eine Rückhubbewegung der Hubstange 20a, wobei sich die Hubstange 20a insbesondere auf den Elektromotor 12a zubewegt. In einem zweiten Abschnitt 52a der Periode 50a der linear-oszillierenden Abtriebsbewegung im zeitlichen Verlauf 42a der Kenngröße erfolgt eine Vorhubbewegung der Hubstange 20a, wobei sich die Hubstange 20a insbesondere vom Elektromotor 12a wegbewegt. Zu zwei Zeitpunkten 54a, 56a weist die Hubstange 20a jeweils einen im Wesentlichen identischen Wert der Geschwindigkeit der Hubstange ausgebildete Positionskenngröße auf, wobei sich die Hubstange 20a insbesondere zu beiden Zeitpunkten 54a, 56a mit einer gleichen Geschwindigkeit von dem Elektromotor 12a wegbewegt. Die Auswerteeinheit 28a ist dazu vorgesehen, Werten der Kenngröße in Abhängigkeit von einem Erfassungszeitpunkt der Werte jeweils einen Wert der Positionskenngröße zuzuordnen oder Werten der Positionskenngröße in Abhängigkeit von einem Erfassungszeitpunkt der Werte jeweils einem Wert der Kenngröße zuzuordnen. Besonders bevorzugt werden jeweils Werte der Kenngröße und der Positionskenngröße einander zugeordnet, die einen zumindest im Wesentlichen identischen Erfassungszeitpunkt aufweisen. Beispielsweise wird mittels der Auswerteeinheit 28a jeweils ein erfasster Wert der Kenngröße ausgewählt und diesem ein Wert der Positionskenngröße zugeordnet, welcher insbesondere einen Erfassungszeitpunkt aufweist, der zeitlich einem Erfassungszeitpunkt des ausgewählten Werts der Kenngröße am nächsten liegt. Die Auswerteeinheit 28a ist dazu vorgesehen, zur Erkennung eines Rückschlags oder eines Durchschlags zwei Werte der als Drehzahl ausgebildeten Kenngröße, insbesondere die Werte des zeitlichen Verlaufs 42a der Kenngröße zu den zwei Zeitpunkten 54a, 56a, welche jeweils einen zumindest im Wesentlichen identischen zugeordneten Wert der Positionskenngröße aufweisen, über eine Subtraktion oder eine Division miteinander zu vergleichen. Die Auswerteeinheit 28a ist dazu vorgesehen, falls eine ermittelte Differenz oder ein ermittelter Quotient der zwei Werte einen in der Auswerteeinheit 28a, insbesondere der Speichereinheit, hinterlegten Grenzwert überschreitet, einen Rückschlag oder einen Durchschlag der Werkzeugmaschine 10a zu erkennen. Vorzugsweise ist die Auswerteeinheit 28a dazu vorgesehen, bei einer Überschreitung des Grenzwerts durch die ermittelte Differenz oder den ermittelten Quotienten der zwei Werte der Kenngröße und/oder bei der Erkennung des Rückschlags oder des Durchschlags der Werkzeugmaschine 10a das Steuersignal auszugeben, wobei insbesondere der Elektromotor 12a über die Steuer- und/oder Regeleinheit 38a abgebremst oder deaktiviert wird oder eine Einstellung einer Drehzahl des Elektromotors 12a erfolgt. Beispielsweise wird, insbesondere nach der Erkennung eines Durchschlags oder eines Rückschlags durch die Auswerteeinheit 28a, über das Steuersignal mittels der Steuer- und/oder Regeleinheit 38a der Elektromotor 12a abgeschaltet, abgebremst oder von dem Getriebe 16a getrennt und/oder abgekoppelt, ein Motorstrom zum Antreiben des Elektromotors 12a kurzzeitig und/oder schlagartig erhöht, insbesondere zu einem Losreißen des Bearbeitungswerkzeugs bei einem Verklemmen am Werkstück, und/oder ein Motorstrom zum Antreiben des Elektromotors 12a kurzzeitig und/oder schlagartig verringert. Vorzugsweise sind/ist die Steuer- und/oder Regeleinheit 38a und/oder die Auswerteeinheit 28a dazu vorgesehen, den Elektromotor 12a wieder in einen normalen Betriebsmodus zurückzuführen, falls der Benutzer die Werkzeugmaschine 10a wieder unter Kontrolle hat und/oder die Werkzeugmaschine, insbesondere das Bearbeitungswerkzeug, vom Werkstück gelöst hat, was vorzugsweise mittels der Steuer- und/oder Regeleinheit 38a und/oder der Auswerteeinheit 28a über die Kenngröße und/oder die Positionskenngröße erfassbar ist.

Es ist denkbar, dass die erfasste Kenngröße oder der zeitliche Verlauf 42a der erfassten Kenngröße mittels der Erfassungseinheit 26a und/oder der Auswerteeinheit 28a, insbesondere vor einer Auswertung eines Rückschlags oder eines Durchschlags der Werkzeugmaschine 10a durch die Auswerteeinheit 28a, elektrisch und/oder elektronisch gefiltert wird, insbesondere zur Entfernung und/oder Reduzierung von einem Rauschen. Ein derart gefilterter zeitlicher Verlauf 58a der erfassten Kenngröße ist in der Figur 2 gezeigt. Vorzugsweise sind die zwei Werte der Kenngröße, welche mittels der Auswerteeinheit 28a zur Erkennung eines Rückschlags oder eines Durchschlags herangezogen werden, dem gefilterten zeitlichen Verlauf 58a der Kenngröße entnommen.

In Figur 3 ist ein weiterer mittels der Erfassungseinheit 26a, insbesondere dem Sensorelement 36a, erfasster beispielhafter erfasster zeitlicher Verlauf 60a der als Drehzahl des Elektromotors 12a ausgebildeten Kenngröße sowie ein gefilterter zeitlicher Verlauf 62a der Kenngröße gezeigt, welche während eines Leerlauf-Betriebs der Werkzeugmaschine 10a gemessen wurden, wobei zu einem Zeitpunkt 64a ein Rückschlag der Werkzeugmaschine 10a erfolgt. Eine Abszisse 66a des in Figur 3 gezeigten Graphen gibt die Zeit an. Eine Ordinate 68a gibt die Drehzahl des Elektromotors 12a an. Insbesondere weist der zeitliche Verlauf 60a der Kenngröße in einem Abschnitt vor dem Rückschlag eine zumindest im Wesentlichen sinusförmige Form auf, da das Bearbeitungswerkzeug während des Leerlauf-Betriebs nicht mit einem Werkstück zusammenwirkt. Nach dem Rückschlag sinkt die Drehzahl des Elektromotors 12a durch ein spontanes Zusammenwirken mit einem Werkstück stark ab, wobei sich insbesondere ein Abfall der Drehzahl auf ein Minimum über mindestens eine Periode 50a, 70a der Abtriebsbewegung hinzieht. Zu Zeitpunkten 72a, 74a, 76a werden mittels der Auswerteeinheit 28a jeweils Werte der Kenngröße zur Erkennung eines Rückschlags oder eines Durchschlags der Werkzeugmaschine 10a miteinander verglichen. Zu dem Zeitpunkt 76a überschreitet eine Differenz oder ein Quotient eines zum Zeitpunkt 76a erfassten Wertes der Kenngröße und eines, vor dem Zeitpunkt 76a, zum Zeitpunkt 74a erfassten anderen Wertes der Kenngröße den Grenzwert, wobei über die Auswerteeinheit 28a das Steuersignal zu einem Abbremsen des Elektromotors 12a ausgegeben wird. Insbesondere wird durch den Rückschlag eine Periode 70a des zeitlicher Verlaufs 60a der Kenngröße gegenüber einer Periode 50a vor dem Rückschlag vergrößert. Bevorzugt wird dieser Effekt durch die Berücksichtigung der Positionskenngröße bei einer Auswahl der zur Erkennung des Rückschlags herangezogenen Werte der Kenngröße kompensiert.

In Figur 4 ist ein beispielhafter Ablauf des Verfahrens 24a zur Erkennung eines Rückschlags oder eines Durchschlags der Werkzeugmaschine 10a mit der linear-oszillierenden Abtriebsbewegung gezeigt. Vorzugsweise entspricht der gezeigte Ablauf von Verfahrensschritten 78a, 80a, 82a, 84a, 86a dem Algorithmus, welcher über die Auswerteeinheit 28a zur Erkennung eines Rückschlags oder eines Durchschlags der Werkzeugmaschine 10a ausgeführt wird. Vorzugsweise wird der Algorithmus wiederholt ausgeführt, insbesondere zumindest bis ein Rückschlag oder ein Durchschlag der Werkzeugmaschine 10a erkannt wird. In einem Verfahrensschritt 78a des Verfahrens 24a wird mittels der Erfassungseinheit 26a kontinuierlich die physikalische Kenngröße der Werkzeugmaschine 10a, insbesondere des Elektromotors 12a, erfasst. Bevorzugt wird die physikalische Kenngröße mittels der Erfassungseinheit 26a in Betriebszuständen der Werkzeugmaschine 10a erfasst, in denen das Bearbeitungswerkzeug bewegt wird. Vorzugsweise wird die physikalische Kenngröße mittels der Erfassungseinheit 26a mit einer Frequenz von mindestens 50 Hz, vorzugsweise mindestens 100 Hz, bevorzugt mindestens 200 Hz und besonders bevorzugt mindestens 750 Hz, erfasst, wobei insbesondere die Frequenz eine Anzahl von Werten der Kenngröße angibt, welche innerhalb einer Sekunde erfasst wird.

In einem weiteren Verfahrensschritt 80a des Verfahrens 24a wird mittels der Auswerteeinheit 28a erfassten Werten der Kenngröße in Abhängigkeit von einem Erfassungszeitpunkt der einzelnen Werte jeweils zumindest ein Wert der Positionskenngröße zugeordnet. Vorzugsweise wird spezifischen oder allen erfassten Werten der Kenngröße mittels der Auswerteeinheit 28a jeweils genau ein Wert der Positionskenngröße zugeordnet. Vorzugsweise wird die Kenngröße mittels der Erfassungseinheit 26a, insbesondere unabhängig von der Positionskenngröße, zumindest im Wesentlichen kontinuierlich erfasst, wobei vorzugsweise zu einer Erkennung eines Rückschlags oder eines Durchschlags jeweils für einen vorbestimmten Wert der Positionskenngröße zumindest zwei Werte der Kenngröße ausgewählt werden. Besonders bevorzugt weisen jeweils ein Wert der Kenngröße und ein dem Wert der Kenngröße zugeordneter Wert der Positionskenngröße einen zumindest im Wesentlichen identischen Erfassungszeitpunkt auf. Insbesondere weist ein einem Wert der Positionskenngröße zugeordneter Wert der Kenngröße einen Erfassungszeitpunkt auf, welcher näher an einem Erfassungszeitpunkt des Werts der Positionskenngröße, welchem der Wert der Kenngröße zugeordnet ist, liegt als alle anderen erfassten Werte der Kenngröße. Insbesondere bei einer Anzahl an Werten der Positionskenngröße, die innerhalb eines Zeitintervalls, insbesondere einer Periode der Abtriebsbewegung, geringer ist als eine Anzahl an Werten der Kenngröße ist denkbar, dass lediglich spezifischen erfassten Werten der Kenngröße jeweils ein Wert der Positionskenngröße zugeordnet wird, wobei insbesondere die Werte der Kenngröße ausgewählt werden, die einen zumindest im Wesentlichen identischen Erfassungszeitpunkt aufweisen wie ein Wert der Positionskenngröße oder die einen Erfassungszeitpunkt aufweisen, welcher näher an einem Erfassungszeitpunkt eines Werts der Positionskenngröße liegt als alle anderen erfassten Werte der Kenngröße. Es ist auch denkbar, dass die Kenngröße, insbesondere Werte der Kenngröße, mittels der Erfassungseinheit 26a jeweils lediglich für bestimmte vorgegebene Werte der Positionskenngröße erfasst wird. Insbesondere ist denkbar, dass die Kenngröße mittels der Erfassungseinheit 26a jeweils nur zu Erfassungszeitpunkten erfasst wird, denen ein bestimmter vorgegebener Wert der Positionskenngröße zugeordnet ist.

Vorzugsweise wird in einem weiteren Verfahrensschritt 82a des Verfahrens 24a, insbesondere vor einer Auswertung der Kenngröße zur Erkennung von einem Rückschlag oder einem Durchschlag durch die Auswerteeinheit 28a, mittels der Auswerteeinheit 28a oder der Erfassungseinheit 26a ein erfasster zeitlicher Verlauf der physikalischen Kenngröße gefiltert, insbesondere zu einer Verringerung von Rauscheffekten. Es ist auch denkbar, dass einzelne Werte der physikalischen Kenngröße jeweils hinsichtlich Rauscheffekten gefiltert werden, beispielsweise durch einen Vergleich mit einem Rauschgrenzwert der Kenngröße und/oder jeweils anderen Werten der physikalischen Kenngröße, welchen vorzugsweise jeweils ein identischer oder ähnlicher Wert der Positionskenngröße zugeordnet ist wie dem jeweiligen einzelnen Wert. In einem weiteren Verfahrensschritt 84a des Verfahrens 24a wird mittels der Auswerteeinheit 28a ein Rückschlag oder ein Durchschlag der Werkzeugmaschine 10a in Abhängigkeit von zumindest zwei zeitlich versetzt erfassten Werten der Kenngröße der Werkzeugmaschine 10a erkannt, wobei den zumindest zwei Werten der Kenngröße jeweils ein zumindest im Wesentlichen identischer Wert der diskreten Positionskenngröße der linear-oszillierenden Abtriebsbewegung der Werkzeugmaschine 10a zugeordnet ist. Bevorzugt werden die erfassten Werte der Kenngröße zu einer Erkennung eines Durchschlags oder eines Rückschlags mittels der Auswerteeinheit 28a jeweils in Abhängigkeit von einem den einzelnen Werten der Kenngröße zugeordneten Wert der Positionskenngröße ausgewählt. In einem Verfahrensschritt des Verfahrens 24a, insbesondere dem Verfahrensschritt 84a, wird mittels der Auswerteeinheit 28a eine Differenz oder ein Quotient der zumindest zwei zeitlich versetzt erfassten Werte der Kenngröße ermittelt und zu einer Erkennung eines Rückschlags oder eines Durchschlags der Werkzeugmaschine 10a mit dem Grenzwert verglichen. Bevorzugt werden die zwei zeitlich-versetzt erfassten Werte der Kenngröße in unterschiedlichen Perioden der linear-oszillierenden Abtriebsbewegung erfasst. Vorzugsweise wird in einem Verfahrensschritt des Verfahrens 24a, insbesondere dem Verfahrensschritt 84a, zur Erkennung eines Rückschlags oder eines Durchschlags eine Änderung der physikalischen Kenngröße, insbesondere des zeitlichen Verlaufs der Kenngröße, relativ zu einem letzten Erfassungszeitpunkt der Kenngröße ermittelt, an dem der Kenngröße ein zumindest im Wesentlichen identischer Wert der Positionskenngröße zugeordnet war wie zu einem momentanen Erfassungszeitpunkt, insbesondere eines zu einem Ermitteln der Änderung herangezogenen Werts der Kenngröße. Vorzugsweise wird in einem Verfahrensschritt des Verfahrens 24a, insbesondere dem Verfahrensschritt 84a, mittels der Auswerteeinheit 28a in Abhängigkeit von den zwei erfassten Werten der Kenngröße, welche jeweils zu einem Zeitpunkt erfasst wurden, bei dem das Bearbeitungswerkzeug eine zumindest im Wesentlichen identische Position aufweist und/oder die Abtriebsbewegung der Werkzeugmaschine 10a einen zumindest identischen Betrag der Positionskenngröße aufweist der Rückschlag oder der Durchschlag erkannt. Besonders bevorzugt wird ein Rückschlag oder ein Durchschlag mittels der Erfassungseinheit 26a und/oder der Auswerteeinheit 28a innerhalb von höchstens 100 ms, vorzugsweise höchstens 40 ms und bevorzugt höchstens 20 ms, erkannt. Besonders bevorzugt wird ein Rückschlag oder ein Durchschlag mittels der Erfassungseinheit 26a und/oder der Auswerteeinheit 28a innerhalb von höchstens zwei Hüben/Perioden der Abtriebsbewegung und ganz besonders bevorzugt innerhalb von höchstens einem/einer Hub/Periode der Abtriebsbewegung erkannt. Es ist denkbar, dass in einem Verfahrensschritt des Verfahrens 24a, insbesondere dem Verfahrensschritt 84a, die zwei zeitlich versetzt erfassten Werte der Kenngröße, insbesondere der Wert und der andere Wert, mittels der Auswerteeinheit 28a zur Erkennung eines Rückschlags oder eines Durchschlags der Werkzeugmaschine 10a derart ausgewählt werden, dass eine Differenz von Erfassungszeitpunkten der zumindest zwei Werte der Kenngröße mehr als eine Periode, zumindest im Wesentlichen genau einer Periode oder einem zumindest im Wesentlichen ganzzahligen Vielfachen einer Periode der oszillierenden, insbesondere linear-oszillierenden, Abtriebsbewegung beträgt. Es ist denkbar, dass in der Auswerteeinheit 28a und/oder einer Speichereinheit mehr als ein Grenzwert zur Erkennung eines Rückschlags oder eines Durchschlags der Werkzeugmaschine 10a hinterlegt ist. Es ist denkbar, dass in zumindest einem Verfahrensschritt des Verfahrens 24a, beispielsweise dem Verfahrensschritt 82a, mittels der Auswerteeinheit 28a in Abhängigkeit von einem Betriebszustand der Werkzeugmaschine 10a, von einer räumlichen Lage der Werkzeugmaschine 10a, von einer Bearbeitungsbewegung der Werkzeugmaschine 10a durch einen Benutzer, von einer Art eines zu bearbeitenden Werkstücks o. dgl. zumindest ein hinterlegter Grenzwert zu einem Vergleich mit der Differenz oder dem Quotienten ausgewählt wird.

In einem weiteren Verfahrensschritt 86a des Verfahrens 24a wird bei einer Erkennung eines Rückschlags oder eines Durchschlags der Werkzeugmaschine 10a mittels der Auswerteeinheit 28a das elektronische Steuersignal ausgegeben. Es ist denkbar, dass mittels der Auswerteeinheit 28a zwischen einem Rückschlag und einem Durchschlag unterschieden wird, wobei insbesondere bei einem Rückschlag ein anderes elektrisches und/oder elektronisches Steuersignal ausgegeben wird und/oder ein Steuersignal mit einer anderen Form und/oder einer anderen Art ausgegeben wird wie bei einem Durchschlag. Beispielsweise wird mittels der Auswerteeinheit 28a zu einer Unterscheidung von einem Rückschlag und einem Durchschlag ein den Grenzwert überschreitender Betrag der Differenz oder des Quotienten herangezogen, wobei insbesondere bei einem Rückschlag ein höherer Wert für den, den Grenzwert überschreitenden Betrag ermittelt wird. Es ist auch denkbar, dass zu einer Unterscheidung von einem Rückschlag und einem Durchschlag mittels der Auswerteeinheit 28a eine Bewegung der Werkzeugmaschine 10a und/oder des Bearbeitungswerkzeugs ausgewertet wird. Insbesondere wird die Werkzeugmaschine 10a, die Hubstange 20a und/oder das Bearbeitungswerkzeug bei einem Rückschlag in eine andere Richtung relativ zu einer vorherigen Bearbeitungsbewegung beschleunigt wie bei einem Durchschlag. Insbesondere wird mittels des elektrischen und/oder elektronischen Steuersignals zumindest eine Funktion der Werkzeugmaschine 10a und/oder des Elektromotors 12a gesteuert. Beispielsweise wird mittels des elektrischen und/oder elektronischen Steuersignals der Elektromotor 12a der Werkzeugmaschine 10a abgeschaltet und/oder über eine Kupplung der Werkzeugmaschine 10a von einem Antriebsstrang der Werkzeugmaschine 10a getrennt. Es ist auch denkbar, dass mittels der Auswerteeinheit 28a über das Steuersignal eine Solldrehzahl des Elektromotors 12a der Werkzeugmaschine 10a angepasst wird. Bevorzugt wird mittels der Steuer- und/oder Regeleinheit 38a der Werkzeugmaschine 10a eine Drehzahl des Elektromotors 12a in Abhängigkeit von der vorgegebenen angepassten Solldrehzahl eingestellt. Alternativ oder zusätzlich ist denkbar, dass mittels des elektrischen und/oder elektronischen Steuersignals, insbesondere bei einem Verklemmen des Bearbeitungswerkzeugs bei einem Rückschlag, ein Motorstrom des Elektromotors 12a kurzzeitig erhöht wird, insbesondere zu einem Losreißen des Bearbeitungswerkzeugs. Alternativ oder zusätzlich ist denkbar, dass mittels des elektrischen und/oder elektronischen Steuersignals eine Drehzahl des Elektromotors 12a, insbesondere zeitweise, gedrosselt wird. Vorzugsweise wird die Werkzeugmaschine 10a, insbesondere der Elektromotor 12a, in einem weiteren Verfahrensschritt 88a des Verfahrens 24a, insbesondere nach einem vorbestimmten Zeitintervall oder bei einer Erfassung eines weiteren elektrischen und/oder elektronischen Steuersignals, mittels der Auswerteeinheit 28a wieder in einen regulären Betriebszustand zu einer Bearbeitung eines Werkstücks versetzt. Insbesondere wird bei einer Ausgabe des Steuersignals mittels der Auswerteeinheit 28a zumindest eine Ausgabeeinheit 32a der Werkzeugmaschine 10a angesteuert. Bevorzugt wird mittels der Ausgabeeinheit 32a, insbesondere bei einer Erkennung eines Rückschlags oder eines Durchschlags, in Abhängigkeit von dem Steuersignal das als Warnton ausgebildete akustische Signal ausgegeben, vorzugsweise zu einer Warnung eines Benutzers der Werkzeugmaschine 10a und/oder anderer Personen in einem Umfeld der Werkzeugmaschine 10a.

Es ist denkbar, dass in einem, insbesondere weiteren, Verfahrensschritt 88a des Verfahrens 24a mittels der Bedienerschnittstelle 30a eine Form und/oder eine Art des auszugebenden elektronischen Steuersignals vorgegeben wird. Insbesondere wird mittels eines Benutzers oder einer externen Einheit über die Bedienerschnittstelle 30a die Form und/oder die Art des auszugebenden elektronischen Steuersignals ausgewählt und in der Auswerteeinheit 28a eingestellt. Beispielsweise wird mittels der Bedienerschnittstelle 30a eine Anpassung der Reaktion der Werkzeugmaschine 10a auf eine Erkennung eines Rückschlags oder eines Durchschlags der Werkzeugmaschine 10a in Abhängigkeit von einem zu bearbeitenden Werkstück oder einer Bearbeitungslage der Werkzeugmaschine 10a angepasst. Insbesondere wird durch die Form und/oder die Art des auszugebenden elektronischen Steuersignals eine Reaktion der Werkzugmaschine auf die Erkennung des Rückschlags oder des Durchschlags bestimmt. In einem weiteren Verfahrensschritt 90a des Verfahrens 24a wird mittels der Steuer- und/oder Regeleinheit 38a in Abhängigkeit von dem ausgegebenen Steuersignal, insbesondere der Form und/oder Art des Steuersignals, der Elektromotor 12a abgebremst oder deaktiviert oder eine Drehzahl des Elektromotors 12a eingestellt.

In den Figuren 5 bis 11 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 bis 11 ist der Buchstabe a durch die Buchstaben b bis d ersetzt.

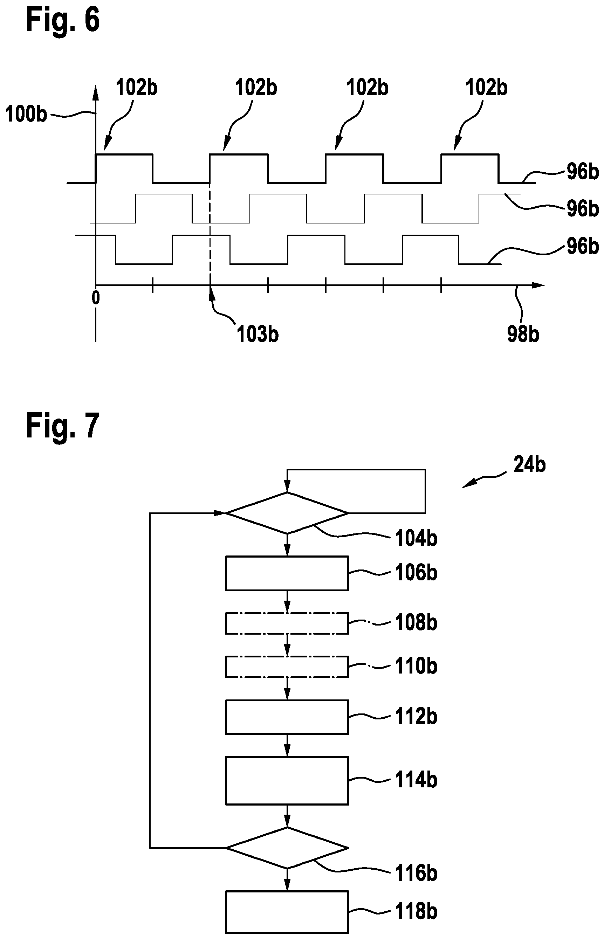

In Figur 5 ist eine alternative Ausgestaltung einer Werkzeugmaschine 10b mit einer Vorrichtung 22b zu einem Durchführen eines Verfahrens 24b (siehe Figur 7) zu einer Erkennung eines Rückschlags oder eines Durchschlags der Werkzeugmaschine 10b gezeigt. Die Werkzeugmaschine 10b weist eine linear-oszillierende Abtriebsbewegung auf. Die Werkzeugmaschine 10b ist als eine elektrische Handwerkzeugmaschine 10b, insbesondere eine Säbelsäge, ausgebildet. Es sind jedoch auch andere Ausgestaltungen der Werkzeugmaschine 10b denkbar. Die Vorrichtung 22b umfasst eine Erfassungseinheit 26b und eine Auswerteeinheit 28b. Die in der Figur 5 dargestellte Werkzeugmaschine 10b weist eine zumindest im Wesentlichen analoge Ausgestaltung zu der in der Beschreibung der Figuren 1 bis 4 beschriebenen Werkzeugmaschine 10a auf, so dass bezüglich einer Ausgestaltung der in der Figur 5 dargestellten Werkzeugmaschine 10b zumindest im Wesentlichen auf die Beschreibung der Figuren 1 bis 4 verwiesen werden kann. Im Unterschied zu der in der Beschreibung der Figuren 1 bis 4 beschriebenen Werkzeugmaschine 10a weist die in der Figur 5 dargestellte Werkzeugmaschine 10b, insbesondere anstatt eines Oszillationsantriebs, vorzugsweise einen Taumelantrieb auf, der dazu vorgesehen ist, eine Rotation einer Antriebswelle 14b eines Elektromotors 12b der Werkzeugmaschine 10b in die linear-oszillierende Abtriebsbewegung einer Hubstange 20b der Werkzeugmaschine 10b umzuwandeln. Bevorzugt ist die Hubstange 20b dazu vorgesehen, die Abtriebsbewegung auf ein Bearbeitungswerkzeug der Werkzeugmaschine 10b zu übertragen (in Figur 5 nicht gezeigt), welches insbesondere an der Hubstange 20b angeordnet ist. Insbesondere wird die Hubstange 20b bei einem Vorhub der Abtriebsbewegung vom Elektromotor 12b wegbewegt und anschließend bei einem Rückhub wieder zum Elektromotor 12b hinbewegt. Die Erfassungseinheit 26b umfasst mehrere Hall-Sonden 94b, welche jeweils zu einer Erfassung einer Magnetfeldkenngröße des Elektromotors 12b vorgesehen sind. Es ist aber auch denkbar, dass die Erfassungseinheit 26b lediglich eine Hall-Sonde 94b umfasst. Bevorzugt sind/ist die Erfassungseinheit 26b und/oder die Auswerteeinheit 28b dazu vorgesehen, in Abhängigkeit von der Magnetfeldkenngröße eine physikalische Kenngröße und/oder eine Positionskenngröße zu einer Erkennung eines Rückschlags oder eines Durchschlags der Werkzeugmaschine 10b zu ermitteln. Die Hall-Sonden 94b sind insbesondere in einem Nahbereich des Elektromotors 12b, insbesondere eines Rotors des Elektromotors 12b, angeordnet. Die Hall-Sonden 94b sind insbesondere jeweils dazu vorgesehen, ein mittels am Rotor befestigten Magneten generiertes Magnetfeld, welches sich durch eine Rotation des Rotors periodisch ändert, zu erfassen (siehe Figur 6). Die Erfassungseinheit 26b umfasst, insbesondere analog zu der Erfassungseinheit 26a der in den Figuren 1 bis 4 beschriebenen Werkzeugmaschine 10a, ein Sensorelement 36b zu einer Erfassung der als Drehzahl des Elektromotors 12b ausgebildeten physikalischen Kenngröße der Werkzeugmaschine 10b.

In Figur 6 sind beispielhafte Messungen von drei zeitlichen Verläufen 96b der mittels der Hall-Sonden 94b erfassten Magnetfeldkenngröße des Elektromotors 12b gezeigt. Eine Abszisse 98b gibt einen Winkel an, welcher relativ von einem Bezugspunkt vom Rotor überstrichen wurde, wobei der Bezugspunkt im in der Figur 6 gezeigten Koordinatensystem im Nullpunkt angeordnet ist. Eine Ordinate 100b stellt die als über die Hall-Sonden 94a generierte elektrische Spannung ausgebildete Magnetfeldkenngröße dar, welche durch das veränderliche Magnetfeld des Elektromotors 12b induziert wird. Der Elektromotor 12b ist vorzugsweise als ein dreiphasiger Elektromotor ausgebildet, wobei insbesondere in Figur 6 ein über eine der Hall-Sonden 94b erfasster zeitlicher Verlauf der Magnetfeldkenngröße gezeigt ist. Insbesondere umfasst der Elektromotor 12b sechs Spulen, wobei jeweils zwei Spulen der sechs Spulen ein Spulenpaar bilden und bei einer Kommutierung des Elektromotors 12b synchron mit einem elektrischen Strom angesteuert werden. Die zeitlichen Verläufe 96b der Magnetfeldkenngröße weisen jeweils drei als Rechteckpulse ausgebildete spezifische Signalverläufe 102b je vollständiger Umdrehung des Rotors auf. Besonders bevorzugt ist der/die mittels der Auswerteeinheit herangezogene(n) spezifische(n) Signalverlauf/Signalverläufe als eine ansteigende Flanke des Rechteckpulses ausgebildet. Die Auswerteeinheit 28b ist dazu vorgesehen, einen Erfassungszeitpunkt 103b (in Figur 6 beispielhaft gezeigt) zumindest eines spezifischen Signalverlaufs 102b der spezifischen Signalverläufe 102b zu ermitteln und gemäß einer Reihenfolge dieses spezifischen Signalverlaufs 102b innerhalb einer Periode der linear-oszillierenden Abtriebsbewegung eine Nummer zuzuordnen. Insbesondere wiederholt sich jeder der spezifischen Signalverläufe 102b, insbesondere unter Berücksichtigung der Reihenfolge der spezifischen Signalverläufe 102b innerhalb einer Periode der linear-oszillierenden Abtriebsbewegung, bei der Abtriebsbewegung periodisch genau einmal. Vorzugsweise ist ein ermittelter Erfassungszeitpunkt eines derart nummerierten spezifischen Signalverlaufs 102b im zeitlichen Verlauf 96b der Magnetfeldkenngröße als Positionskenngröße ausgebildet. Die Auswerteeinheit 28b ist dazu vorgesehen, einen Rückschlag oder einen Durchschlag der Werkzeugmaschine 10b in Abhängigkeit von zumindest zwei zeitlich versetzt erfassten Werten der als Drehzahl des Elektromotors 12b ausgebildeten Kenngröße der Werkzeugmaschine 10b zu erkennen, wobei den zumindest zwei Werten der Kenngröße jeweils ein zumindest im Wesentlichen identischer Wert der als Erfassungszeitpunkt eines spezifischen Signalverlaufs 102b im zeitlichen Verlauf 96b der Magnetfeldkenngröße ausgebildeten Positionskenngröße der linear-oszillierenden Abtriebsbewegung der Werkzeugmaschine 10b zugeordnet ist. Insbesondere genügt zur Erkennung eines Rückschlags oder eines Durchschlags der Werkzeugmaschine 10b mittels der Auswerteeinheit 28b lediglich ein erfasster zeitlicher Verlauf 96b der Magnetfeldkenngröße.

Alternativ ist denkbar, dass die Auswerteeinheit 28b dazu vorgesehen ist, aus der erfassten Magnetfeldkenngröße die physikalische Kenngröße zu ermitteln. Insbesondere ist die Auswerteeinheit 28b dazu vorgesehen, in Abhängigkeit von einem ermittelten Erfassungszeitpunkt eines erfassten und/oder ermittelten spezifischen Signalverlaufs 102b innerhalb eines zeitlichen Verlaufs 96b der Magnetfeldkenngröße die Kenngröße zu ermitteln. Beispielsweise ist die Kenngröße als Zeitintervall zwischen zumindest zwei spezifischen Signalverläufen 102b ausgebildet, welche insbesondere jeweils innerhalb verschiedener Perioden der linear-oszillierenden Abtriebsbewegung erfasst werden. Alternativ ist auch denkbar, dass die Kenngröße als eine Taktfrequenz von Halb-Brücken des als bürstenloser Gleichstrommotor ausgebildeten Elektromotors 12b oder als eine Frequenz eines Phasenstroms des Elektromotors 12b ausgebildet ist.

In Figur 7 ist ein beispielhafter Ablauf einer alternativen Ausgestaltung des Verfahrens 24b zu einer Erkennung eines Rückschlags oder eines Durchschlags der Werkzeugmaschine 10b mit der linear-oszillierenden Abtriebsbewegung gezeigt. Das in der Figur 7 dargestellte Verfahren 24b weist eine zumindest im Wesentlichen analoge Ausgestaltung zu dem in der Beschreibung der Figur 4 beschriebenen Verfahren 24a auf. Vorzugsweise entspricht der gezeigte Ablauf der Verfahrensschritte des Verfahrens 24b einem Algorithmus, welcher über die Auswerteeinheit 28b zur Erkennung eines Rückschlags oder eines Durchschlags der Werkzeugmaschine 10b ausgeführt wird. Vorzugsweise wird der Algorithmus wiederholt ausgeführt, insbesondere bis ein Rückschlag oder ein Durchschlag der Werkzeugmaschine 10b erkannt wird. In einem Verfahrensschritt 104b des Verfahrens 24b wird mittels der Erfassungseinheit 26b eine Magnetfeldkenngröße des Elektromotors 12b der Werkzeugmaschine 10b erfasst und mittels der Auswerteeinheit 28b geprüft, ob ein spezifischer Signalverlauf im erfassten zeitlichen Verlauf 96b der Magnetkenngröße vorliegt. Insbesondere falls ein spezifischer Signalverlauf erkannt wird, wird in einem weiteren Verfahrensschritt 106b des Verfahrens 24b mittels der Auswerteeinheit 28b ein Zeitintervall zwischen einem Erfassungszeitpunkt des spezifischen Signalverlaufs und einem Erfassungszeitpunkt eines zuletzt erfassten spezifischen Signalverlaufs berechnet. In einem weiteren Verfahrensschritt 108b des Verfahrens 24b wird mittels der Auswerteeinheit 28b in Abhängigkeit von der erfassten Magnetfeldkenngröße die Kenngröße ermittelt, wobei insbesondere in Abhängigkeit des berechneten Zeitintervalls ein Wert der als Drehzahl des Elektromotors 12b ausgebildeten physikalische Kenngröße der Werkzeugmaschine 10b ermittelt wird. Vorzugsweise wird mittels der Auswerteeinheit 28b dem ermittelten Wert der Kenngröße in Abhängigkeit von einem Erfassungszeitpunkt ein Wert einer Positionskenngröße zugeordnet, wobei insbesondere die Positionskenngröße als eine Nummer des dem Wert der Kenngröße entsprechenden spezifischen Signals, insbesondere über welches der Wert der Kenngröße im Verfahrensschritt 108b ermittelt wurde, in einer Reihenfolge von spezifischen Signalen innerhalb einer Periode der linear-oszillierenden Abtriebsbewegung ausgebildet ist. Insbesondere wird mittels der Auswerteeinheit 28b in Abhängigkeit von der erfassten Magnetfeldkenngröße die Positionskenngröße ermittelt. Bevorzugt wird zu einer Ermittlung der Positionskenngröße, insbesondere im Verfahrensschritt 108b, mittels der Auswerteeinheit 28b zumindest ein Übersetzungsparameter eines Getriebes 16b der Werkzeugmaschine 10b herangezogen, wobei eine Anzahl an spezifischen Signalverläufen der Magnetfeldkenngröße berechnet wird, welche zu einer Bestimmung einer Länge der Periode der linear-oszillierenden Abtriebsbewegung relativ zum zeitlichen Verlauf der Magnetfeldkenngröße herangezogen wird. Insbesondere wird mittels der Auswerteeinheit 28b zur Ermittlung der Positionskenngröße in Abhängigkeit des Übersetzungsparameters eine Anzahl an spezifischen Signalverläufen der Magnetfeldkenngröße innerhalb der Periode der linear-oszillierenden Abtriebsbewegung ermittelt. In einem weiteren Verfahrensschritt 110b des Verfahrens 24b erfolgt mittels der Auswerteeinheit 28b eine Filterung des ermittelten zeitlichen Verlaufs der Kenngröße. In einem weiteren Verfahrensschritt 112b des Verfahrens 24b wird der ermittelte zeitliche Verlauf der Kenngröße in der Auswerteeinheit 28b hinterlegt. Es ist denkbar, das in einem Verfahrensschritt des Verfahrens 24b, insbesondere dem Verfahrensschritt 112b, mittels der Auswerteeinheit 28b erfassten Werten der Kenngröße in Abhängigkeit von einem Erfassungszeitpunkt der einzelnen Werte jeweils zumindest ein Wert der Positionskenngröße zugeordnet wird. In einem weiteren Verfahrensschritt 114b des Verfahrens 24b wird mittels der Auswerteeinheit 28b der ermittelte Wert der als Drehzahl ausgebildeten Kenngröße mit einem zuvor ermittelten anderen Wert der Kenngröße verglichen, wobei dem Wert der Kenngröße und dem anderen Wert der Kenngröße ein identischer Wert der Positionskenngröße zugeordnet ist. In einem Verfahrensschritt des Verfahrens 24b, insbesondere dem Verfahrensschritt 114b, werden die zwei zeitlich versetzt erfassten Werte der Kenngröße, insbesondere der Wert und der andere Wert, mittels der Auswerteeinheit 28b zur Erkennung eines Rückschlags oder eines Durchschlags der Werkzeugmaschine 10b derart ausgewählt, dass eine Differenz von Erfassungszeitpunkten der zumindest zwei Werte der Kenngröße zumindest im Wesentlichen genau eine Periode der oszillierenden, insbesondere linear-oszillierenden, Abtriebsbewegung beträgt. Es ist auch denkbar, dass die Differenz der Erfassungszeitpunkte der zumindest zwei Werte der Kenngröße zumindest im Wesentlichen einem ganzzahligen Vielfachen einer Periode der oszillierenden, insbesondere linear-oszillierenden, Abtriebsbewegung beträgt. Insbesondere wird zu einem Vergleich des Werts und des anderen Werts mittels der Auswerteeinheit 28b eine Differenz oder ein Quotient des Werts und des anderen Werts gebildet. In einem weiteren Verfahrensschritt 116b des Verfahrens 24b wird mittels der Auswerteeinheit 28b die gebildete Differenz oder der gebildete Quotient der zwei zeitlich versetzt erfassten Werte der Kenngröße ermittelt und zu einer Erkennung eines Rückschlags oder eines Durchschlags der Werkzeugmaschine 10b mit einem Grenzwert verglichen. Wird mittels der Auswerteeinheit 28b eine Überschreitung des Grenzwerts ermittelt, wird in einem weiteren Verfahrensschritt 118b des Verfahrens 24b mittels der Auswerteeinheit 28b zu einer Signalisierung eines Durchschlags oder eines Rückschlags ein elektronisches Steuersignal ausgegeben. Insbesondere wird mittels des elektronischen Steuersignals und mittels einer Steuer- und/oder Regeleinheit 38b der Werkzeugmaschine 10b, der Elektromotor 12b deaktiviert oder abgebremst, der Elektromotor 12b von dem Getriebe 16b getrennt, eine Bremse des Bearbeitungswerkzeugs aktiviert o. dgl. Überschreitet die ermittelte Differenz oder der ermittelte Quotient den Grenzwert nicht, wird mittels der Auswerteeinheit 28b die erfasste Magnetfeldkenngröße gemäß dem Verfahrensschritt 104b wiederholt auf einen spezifischen Signalverlauf geprüft.

Zusätzlich ist denkbar, dass in einem Verfahrensschritt des Verfahrens 24b mittels einer Bedienerschnittstelle (in den Figuren nicht gezeigt) der Werkzeugmaschine 10b eine Form und/oder eine Art eines auszugebenden elektronischen Steuersignals vorgegeben wird, wobei in zumindest einem weiteren Verfahrensschritt des Verfahrens 24b, insbesondere dem Verfahrensschritt 118b, bei einer Erkennung eines Rückschlags oder eines Durchschlags der Werkzeugmaschine 10b mittels der Auswerteeinheit das elektronische Steuersignal ausgegeben wird.

Alternativ ist denkbar, dass die physikalische Kenngröße zur Erkennung eines Rückschlags oder eines Durchschlags als von der Drehzahl des Elektromotors 12b verschiedene Kenngröße ausgebildet ist, welche insbesondere mittels der Auswerteeinheit 28b in Abhängigkeit von der erfassten Magnetfeldkenngröße ermittelt wird. Beispielsweise ist denkbar, dass in einem Verfahrensschritt des Verfahrens 24b, insbesondere dem Verfahrensschritt 108b, mittels der Auswerteeinheit 28b in Abhängigkeit von einem Erfassungszeitpunkt eines erfassten spezifischen Signalverlaufs innerhalb eines zeitlichen Verlaufs der Magnetfeldkenngröße die Kenngröße ermittelt wird, wobei sich der spezifische Signalverlauf bei der Abtriebsbewegung, insbesondere genau einmal, periodisch wiederholt. Alternativ ist denkbar, dass anstatt der Magnetfeldkenngröße eine andere Kenngröße des Elektromotors 12b zu einer Ermittlung der, insbesondere als Drehzahl des Elektromotors 12b ausgebildeten, physikalischen Kenngröße der Werkzeugmaschine 10b herangezogen wird. Beispielsweise ist denkbar, dass die, insbesondere als Drehzahl des Elektromotors 12b ausgebildete, physikalische Kenngröße der Werkzeugmaschine 10b mittels der Auswerteeinheit 28b in Abhängigkeit einer Stromkenngröße des Elektromotors 12b ermittelt wird. Vorzugsweise ist die Stromkenngröße als ein elektrischer Strom des Elektromotors 12b ausgebildet, mit welchem zumindest ein Spulenpaar des Elektromotors 12b angesteuert wird. Insbesondere ist der oben beschriebene Ablauf des Verfahrens 24b zur Erkennung eines Rückschlags oder eines Durchschlags der Werkzeugmaschine 10b analog mit der Stromkenngröße anstatt der Magnetfeldkenngröße denkbar.

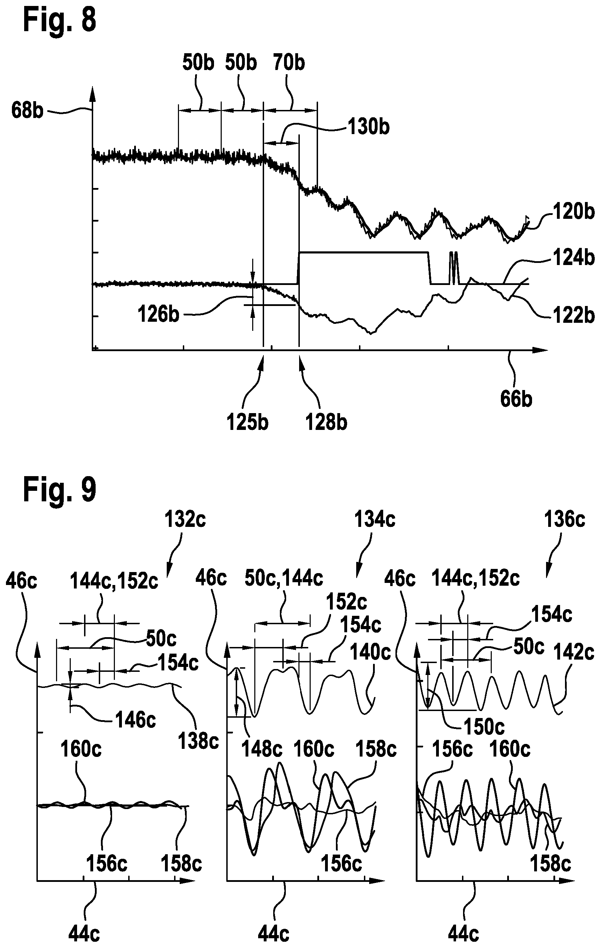

In Figur 8 ist eine beispielhafte Messung von zeitlichen Verläufen der Drehzahl des Elektromotors 12b der Werkzeugmaschine 10b, der ermittelten Differenz der zwei zeitlich versetzt erfassten Werte der Kenngröße zur Erkennung eines Rückschlags oder eines Durchschlags der Werkzeugmaschine 10b und des mittels der Auswerteeinheit 28b ausgegebenen Steuersignals bei einer Erkennung eines Rückschlags der Werkzeugmaschine 10b gezeigt. Eine Abszisse 66b stellt die Zeit dar, wobei zu einem Zeitpunkt 125b ein Rückschlag der Werkzeugmaschine 10b erfolgt. Eine Ordinate 68b stellt für die drei gezeigten Graphen 120b, 122b, 124b die Drehzahl des Elektromotors 12b, die ermittelte Differenz der zwei Werte der Drehzahl des Elektromotors 12b und eine Signalstärke des Steuersignals dar. Ein erster Graph 120b stellt den zeitlichen Verlauf der als Drehzahl des Elektromotors 12b ausgebildeten Kenngröße dar. Ein zweiter Graph 122b stellt den zeitlichen Verlauf der ermittelten Differenz der zwei zeitlich versetzt erfassten Werte der Kenngröße dar. Ein dritter Graph 124b stellt den zeitlichen Verlauf des mittels der Auswerteeinheit 28b ausgegebenen Steuersignals dar. Überschreitet die ermittelte Differenz der zwei Werte der Kenngröße zu einem Zeitpunkt 128b den Grenzwert 126b, wird mittels der Auswerteeinheit 28b der Rückschlag der Werkzeugmaschine 10b erkannt und das Steuersignal ausgegeben, welches insbesondere im dritten Graph 124b zu sehen ist. Insbesondere ist ein Zeitintervall 130b zwischen dem Zeitpunkt 125b des Rückschlags und dem Zeitpunkt 128b der Erkennung des Rückschlags durch die Auswerteeinheit 28b kürzer als eine Periode 70b der Abtriebsbewegung. Vorzugsweise wird mittels der Auswerteeinheit 28b eine Mehrzahl von spezifischen Signalverläufen in dem zeitlichen Verlauf der erfassten Magnetfeldkenngröße zu einer Erkennung eines Rückschlags oder eines Durchschlags herangezogen. Insbesondere ist das Zeitintervall 130b zwischen dem Zeitpunkt 125b des Rückschlags und dem Zeitpunkt 128b der Erkennung des Rückschlags durch die Auswerteeinheit 28b kleiner als eine Dauer der Periode 50b der linear-oszillierenden Abtriebsbewegung im Leerlauf-Betrieb vor dem Rückschlag.

In Figur 9 sind beispielhafte Messungen einer Drehzahl eines Elektromotors 12c einer Werkzeugmaschine 10c in einem Leerlauf-Betrieb der Werkzeugmaschine 10c, bei einem Bearbeitungsvorgang, insbesondere einem Sägevorgang, der Werkzeugmaschine 10c und bei einem Rückschlag der Werkzeugmaschine 10c gezeigt. Die zu der Figur 9 beschriebene Werkzeugmaschine 10c weist eine zumindest im Wesentlichen analoge Ausgestaltung zu der in der Beschreibung der Figuren 1 bis 4 beschriebenen Werkzeugmaschine 10a oder zu der in der Figur 5 beschriebenen Werkzeugmaschine 10b auf, so dass bezüglich einer Ausgestaltung der zu der Figur 9 beschriebenen Werkzeugmaschine 10c zumindest im Wesentlichen auf die Beschreibung der Figuren 1 bis 4 beziehungsweise der Figur 5 verwiesen werden kann. Abszissen 44c der in Figur 9 gezeigten Darstellungen 132c, 134c, 136c geben jeweils die Zeit an, wobei Ordinaten 46c der Darstellungen 132c, 134c, 136c jeweils die Drehzahl in 1/min anzeigen. In der linken Darstellung 132c ist eine Messung in dem Leerlauf-Betrieb gezeigt, wobei ein oberer Graph 138c den zeitlichen Verlauf der Drehzahl darstellt. In der mittleren Darstellung 134c ist eine Messung bei dem Bearbeitungsvorgang gezeigt, wobei ein oberer Graph 140c den zeitlichen Verlauf der Drehzahl darstellt. In der rechten Darstellung 136c ist eine Messung bei dem Rückschlag gezeigt, wobei ein oberer Graph 142c den zeitlichen Verlauf der Drehzahl direkt nach dem Rückschlag darstellt. In einer anderen alternativen Ausgestaltung eines Verfahrens 24c zu einer Erkennung eines Rückschlags oder eines Durchschlags der Werkzeugmaschine 10c mit einer oszillierenden, insbesondere linear-oszillierenden, Abtriebsbewegung erfolgt in zumindest einem Verfahrensschritt mittels einer Auswerteeinheit 28c einer Vorrichtung 22c der Werkzeugmaschine 10c eine Erkennung eines Rückschlags oder eines Durchschlags der Werkzeugmaschine 10c in Abhängigkeit von einem Verhältnis einer Schwingungsfrequenz, welche sich aus einer Schwingungsperiode 144c berechnen lässt, und einer Schwingungsamplitude 146c, 148c, 150c eines zeitlichen Verlaufs einer Drehzahl eines Motors 12c der Werkzeugmaschine 10c, welche zumindest in Abhängigkeit von den zwei Werten der Kenngröße ermittelt wird. Das zu der Figur 9 beschriebene Verfahren 24c weist eine zumindest im Wesentlichen analoge Ausgestaltung zu dem in der Beschreibung der Figur 4 beschriebenen Verfahren 24a oder zu dem in der Figur 7 beschriebenen Verfahren 24b auf, so dass bezüglich einer Ausgestaltung des zu der Figur 9 beschriebenen Verfahrens 24c zumindest im Wesentlichen auf die Beschreibung der Figur 4 beziehungsweise der Figur 7 verwiesen werden kann. In den in der Figur 9 gezeigten Messungen der Drehzahl des Motors 12c ist zu erkennen, dass sich das Verhältnis der Schwingungsfrequenz und der Schwingungsamplitude 146c, 148c, 150c in einem Leerlauf-Betrieb, bei einem Bearbeitungsvorgang und bei einem Rückschlag jeweils unterscheidet. Insbesondere ist im Leerlauf-Betrieb die Schwingungsfrequenz des zeitlichen Verlaufs der Drehzahl des Motors 12c größer als beim Bearbeitungsvorgang, wobei die Schwingungsamplitude 146c des zeitlichen Verlaufs der Drehzahl des Motors 12c im Leerlauf-Betrieb niedriger ist als die Schwingungsamplitude 148c beim Bearbeitungsvorgang. Insbesondere ist im Leerlauf-Betrieb die Schwingungsfrequenz des zeitlichen Verlaufs der Drehzahl des Motors 12c zumindest im Wesentlichen gleich wie im Falle des Rückschlags, wobei die Schwingungsamplitude 146c des zeitlichen Verlaufs der Drehzahl des Motors 12c im Leerlauf-Betrieb niedriger ist wie die Schwingungsamplitude 150c im Falle des Rückschlags. Insbesondere ist beim Bearbeitungsvorgang die Schwingungsfrequenz des zeitlichen Verlaufs der Drehzahl des Motors 12c niedriger wie im Falle des Rückschlags, wobei die Schwingungsamplitude 148c des zeitlichen Verlaufs der Drehzahl des Motors 12c beim Bearbeitungsvorgang zumindest im Wesentlichen gleich ist wie die Schwingungsamplitude 150c im Falle des Rückschlags. Es ist denkbar, dass die Schwingungsfrequenz mittels der Auswerteeinheit 28c aus dem zeitlichen Verlauf der Drehzahl des Motors 12c ermittelt wird, beispielsweise mittels einer Schnellen Fourier-Transformation. Alternativ oder zusätzlich ist denkbar, dass mittels der Auswerteeinheit 28c aus dem zeitlichen Verlauf der Drehzahl zeitliche Verläufe von Signaldifferenzen aus zwei Werten der als Drehzahl ausgebildeten Kenngröße jeweils über eine ganze Periode 50c der oszillierenden, insbesondere linear-oszillierenden, Abtriebsbewegung, über eine halbe Periode 152c der oszillierenden, insbesondere linear-oszillierenden, Abtriebsbewegung und über eine viertel Periode 154c der oszillierenden, insbesondere linear-oszillierenden, Abtriebsbewegung ermittelt werden. Diese sind jeweils in den in Figur 9 gezeigten Darstellungen 132c, 134c, 136c unten zu sehen, wobei jeweils ein Graph 156c einen zeitlichen Verlauf der Signaldifferenz aus zwei Werten der als Drehzahl ausgebildeten Kenngröße jeweils über eine ganze Periode 50c der oszillierenden, insbesondere linear-oszillierenden, Abtriebsbewegung zeigt, jeweils ein Graph 158c einen zeitlichen Verlauf der Signaldifferenz aus zwei Werten der als Drehzahl ausgebildeten Kenngröße jeweils über eine halbe Periode 152c der oszillierenden, insbesondere linear-oszillierenden, Abtriebsbewegung zeigt und jeweils ein Graph 160c einen zeitlichen Verlauf der Signaldifferenz aus zwei Werten der als Drehzahl ausgebildeten Kenngröße jeweils über eine ganze Periode 154c der oszillierenden, insbesondere linear-oszillierenden, Abtriebsbewegung zeigt. Insbesondere wird mittels der Auswerteeinheit 28c zu einer Ermittlung der zeitlichen Verläufe von Signaldifferenzen jeweils ein momentaner Wert der Drehzahl mit einem zeitlich vor einer ganzen Periode 50c, einer halben Periode 152c beziehungsweise einer viertel Periode 154c der Abtriebsbewegung erfassten Wert der Drehzahl subtrahiert und über die Zeit aufgetragen. Insbesondere ist denkbar, dass mittels der Auswerteeinheit 28c in Abhängigkeit von den ermittelten zeitlichen Verläufen von Signaldifferenzen eine Erkennung eines Rückschlags oder eines Durchschlags erfolgt. Beispielsweise werden die ermittelten zeitlichen Verläufe von Signaldifferenzen zur Erkennung eines Rückschlags oder eines Durchschlags mittels der Auswerteeinheit 28c mit einem hinterlegten Grenzwert und/oder einem vorher ermittelten Wert der zeitlichen Verläufe von Signaldifferenzen verglichen.

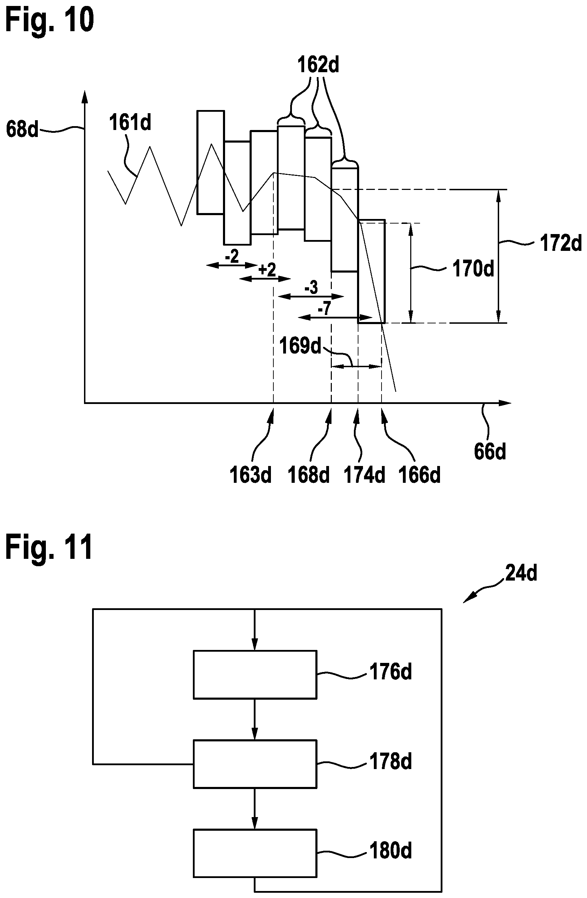

In Figur 10 ist eine weitere beispielhafte Messung einer als eine Drehzahl eines Motors 12d einer Werkzeugmaschine 10d (in Figuren nicht gezeigt) ausgebildeten physikalischen Kenngröße der Werkzeugmaschine 10d bei einem Rückschlag der Werkzeugmaschine 10d gezeigt. Insbesondere ist in Figur 10 ein zeitlicher Verlauf 161d der als Drehzahl ausgebildeten Kenngröße gezeigt. Eine in der Figur 10 gezeigte Abszisse 66d stellt die Zeit dar. Eine in der Figur 10 gezeigte Ordinate 68d stellt die Drehzahl des Motors 12d dar. Die zu den Figuren 10 und 11 beschriebene Werkzeugmaschine 10d weist eine zumindest im Wesentlichen analoge Ausgestaltung zu der in der Beschreibung der Figuren 1 bis 4 beschriebenen Werkzeugmaschine 10a oder zu der in der Figur 5 beschriebenen Werkzeugmaschine 10b auf, so dass bezüglich einer Ausgestaltung der in den Figuren 10 und 11 dargestellten Werkzeugmaschine 10d zumindest im Wesentlichen auf die Beschreibung der Figuren 1 bis 4 beziehungsweise der Figur 5 verwiesen werden kann. Insbesondere wird die als Drehzahl des Motors 12d ausgebildete Kenngröße mittels einer Erfassungseinheit 26d einer Vorrichtung 22d der Werkzeugmaschine 10d erfasst oder mittels einer Auswertungseinheit der Vorrichtung 22d, beispielsweise in Abhängigkeit von einer Magnetfeldkenngröße oder einer Stromkenngröße des Motors 12d, ermittelt. Vorzugsweise erfolgt eine Erkennung eines Rückschlags oder eines Durchschlags mittels der Auswerteeinheit 28d in Abhängigkeit von zumindest zwei Werten der Kenngröße, welche insbesondere zeitlich versetzt erfasst wurden, wobei eine Differenz von Erfassungszeitpunkten der zwei Werte der Kenngröße größer ist als ein Zeitintervall zwischen zwei nacheinander erfassten Werten der Kenngröße. Vorzugsweise werden die zwei Werte der Kenngröße nicht nacheinander erfasst. Insbesondere wird zwischen den zwei Werten der Kenngröße zumindest ein anderer Wert der Kenngröße erfasst. Die Kenngröße wird mittels der Erfassungseinheit 26d in Zeitintervallen 162d erfasst, welche jeweils höchstens 20 ms, vorzugsweise höchstens 10 ms und bevorzugt höchstens 5 ms, betragen. Bevorzugt wird mittels der Erfassungseinheit 26d pro Zeitintervall 162d genau ein Wert der Kenngröße erfasst. Insbesondere wird jeder erfasste Wert der Kenngröße mittels der Auswerteeinheit 28d mit zumindest einem anderen vorher erfassten Wert der Kenngröße verglichen, insbesondere subtrahiert oder dividiert, wobei ein Vergleichswert, insbesondere eine Differenz oder ein Quotient dieser Werte, zur Erkennung eines Rückschlags oder eines Durchschlags der Werkzeugmaschine 10d mit einem Grenzwert 172d (in Figur 10 beispielhaft angezeigt) verglichen wird. Besonders bevorzugt werden der erfasste Wert und der andere vorher erfasste Wert der Kenngröße zeitlich versetzt zueinander erfasst, wobei insbesondere ein Zeitintervall 169d zwischen einem Erfassungszeitpunkt 166d des Werts der Kenngröße und einem Erfassungszeitpunkt 168d des vor dem Wert erfassten anderen Werts der Kenngröße größer ist als ein Zeitintervall 162d der Erfassung der Kenngröße durch die Erfassungseinheit 26d. Der Rückschlag erfolgt zu einem Zeitpunkt 163d. Zu einem Zeitpunkt, welcher zumindest im Wesentlichen dem Erfassungszeitpunkt 166d entspricht, wird mittels der Auswerteeinheit 28d eine Überschreitung des Grenzwerts 172d durch die Differenz dem zum Erfassungszeitpunkt 166d erfassten Werts der Kenngröße und des zum Zeitpunkt 168d erfassten Werts der Kenngröße erkannt, wobei insbesondere ein Rückschlag oder ein Durchschlag der Werkzeugmaschine 10d erkannt wird. Insbesondere ist in Figur 10 gut zu erkennen, dass eine Differenz 170d des zum Erfassungszeitpunkts 166d erfassten Werts der Kenngröße und einem zu einem Zeitpunkt 174d direkt zuvor gemessenen weiteren Wert der Kenngröße den Grenzwert 172d noch nicht überschreitet, wodurch erst zu einem späteren Zeitpunkt eine Erkennung des Rückschlags oder des Durchschlags erfolgt wäre.

In Figur 11 ist ein beispielhafter Ablauf einer weiteren alternativen Ausgestaltung eines Verfahrens 24d zu einer Erkennung eines Rückschlags oder eines Durchschlags der Werkzeugmaschine 10d mit der linear-oszillierenden Abtriebsbewegung gezeigt. Vorzugsweise entspricht der gezeigte Ablauf der Verfahrensschritte des Verfahrens 24d einem Algorithmus, welcher über die Auswerteeinheit 28d zur Erkennung eines Rückschlags oder eines Durchschlags der Werkzeugmaschine 10d ausgeführt wird. Vorzugsweise wird der Algorithmus wiederholt ausgeführt, insbesondere bis ein Rückschlag oder ein Durchschlag der Werkzeugmaschine 10d erkannt wird. In einem Verfahrensschritt 176d des Verfahrens 24d wird mittels der Erfassungseinheit 26d kontinuierlich oder periodisch die physikalische Kenngröße der Werkzeugmaschine 10d erfasst. Besonders bevorzugt wird die Kenngröße mittels der Erfassungseinheit 26d in Zeitintervallen erfasst, welche jeweils höchstens 20 ms, vorzugsweise höchstens 10 ms und bevorzugt höchstens 5 ms, betragen. In einem weiteren Verfahrensschritt 178d des Verfahrens 24d erfolgt eine Erkennung eines Rückschlags oder eines Durchschlags der Werkzeugmaschine 10d mittels der Auswerteeinheit 28d in Abhängigkeit von zumindest zwei Werten der Kenngröße, welche insbesondere zeitlich versetzt erfasst wurden, wobei eine Differenz von Erfassungszeitpunkten der zwei Werte der Kenngröße größer ist als ein Zeitintervall zwischen zwei nacheinander erfassten Werten der Kenngröße. Insbesondere wird mittels der Auswerteeinheit 28d zur Erkennung eines Rückschlags oder eines Durchschlags der Werkzeugmaschine 10d jeder erfasste Wert der Kenngröße mit einem zuvor erfassten Wert der Kenngröße verglichen. Vorzugsweise werden mittels der Auswerteeinheit 28d zumindest im Wesentlichen alle erfassten Werte der Kenngröße zur Erkennung eines Rückschlags oder eines Durchschlags der Werkzeugmaschine 10d herangezogen. Insbesondere wird mittels der Auswerteeinheit 28d zur Erkennung eines Rückschlags oder eines Durchschlags der Werkzeugmaschine 10d eine Differenz oder ein Quotient der zwei Werte der Kenngröße ermittelt und mit dem Grenzwert verglichen. Vorzugsweise wird mittels der Auswerteeinheit 28d bei einem Überschreiten des Grenzwerts durch die Differenz oder den Quotienten ein Rückschlag oder ein Durchschlag der Werkzeugmaschine 10d erkannt. Insbesondere wird in einem weiteren Verfahrensschritt 180d des Verfahrens 24d bei einer Erkennung eines Rückschlags oder eines Durchschlags mittels der Auswerteeinheit 28d ein Steuersignal zu einer Deaktivierung oder einer Abbremsung des Motors 12d, zu einem Trennen des Motors 12d von einem Antriebsstrang der Werkzeugmaschine 10d, zu einem Aktivieren eines Bremssystems der Werkzeugmaschine 10d, insbesondere zu einem Abbremsen des Bearbeitungswerkzeugs o. dgl. ausgegeben. Wird bei einem Vergleich der Differenz oder des Quotienten der zwei Werte der Kenngröße mit dem Grenzwert mittels der Auswerteeinheit 28d keine Überschreitung des Grenzwerts ermittelt, erfolgt wiederholt ein weiterer Vergleich eines neuen erfassten Werts der Kenngröße, gemäß dem Verfahrensschritt 178d.

## Patentansprüche

1. Verfahren zu einer Erkennung eines Rückschlags oder eines Durchschlags einer Handwerkzeugmaschine (10a; 10b; 10c; 10d), welche als eine Säbelsäge oder als eine Stichsäge oder als ein elektrischer Fuchsschwanz ausgebildet ist, mit einer linear-oszillierenden Abtriebsbewegung, wobei in zumindest einem Verfahrensschritt (78a; 104b; 176d) mittels einer Erfassungseinheit (26a; 26b; 26d) kontinuierlich oder periodisch zumindest eine physikalische Kenngröße eines Motors (12a; 12b; 12c; 12d), der Handwerkzeugmaschine (10a; 10b; 10c; 10d), erfasst wird, wobei in zumindest einem Verfahrensschritt (84a; 112b) mittels einer Auswerteeinheit (28a; 28b; 28c; 28d) ein Rückschlag oder ein Durchschlag der Werkzeugmaschine (10a; 10b; 10c; 10d) in Abhängigkeit von zumindest zwei zeitlich versetzt erfassten Werten der Kenngröße des Motors (12a; 12b; 12c; 12d) erkannt wird, **dadurch gekennzeichnet, dass** den zumindest zwei Werten der Kenngröße jeweils ein, zumindest im Wesentlichen, identischer Wert einer diskreten Positionskenngröße der linear-oszillierenden Abtriebsbewegung der Handwerkezugmaschine (10a; 10b; 10c; 10d), zugeordnet ist.

2. Verfahren nach Anspruch 1, **dadurch gekennzeichnet, dass** in zumindest einem Verfahrensschritt (80a; 112b) mittels der Auswerteeinheit (28a; 28b; 28c), insbesondere spezifischen oder allen, erfassten Werten der Kenngröße in Abhängigkeit von einem Erfassungszeitpunkt jeweils zumindest ein Wert der Positionskenngröße zugeordnet wird.

3. Verfahren nach Anspruch 1 oder 2, **dadurch gekennzeichnet, dass** in zumindest einem Verfahrensschritt (84a; 116b) mittels der Auswerteeinheit (28a; 28b; 28c) eine Differenz oder ein Quotient der zumindest zwei zeitlich versetzt erfassten Werte der Kenngröße ermittelt wird und zu einer Erkennung eines Rückschlags oder eines Durchschlags der Handwerkzeugmaschine (10a; 10b; 10c; 10d) mit zumindest einem Grenzwert verglichen wird.

4. Verfahren nach einem der vorhergehenden Ansprüche, **dadurch gekennzeichnet, dass** in zumindest einem Verfahrensschritt (104b) mittels der Erfassungseinheit (26b) eine Magnetfeldkenngröße oder eine Stromkenngröße eines Elektromotors (12b) der Handwerkzeugmaschine (10b) erfasst wird, wobei mittels der Auswerteeinheit (28b) in Abhängigkeit von der erfassten Magnetfeldkenngröße oder Stromkenngröße die Kenngröße und/oder die Positionskenngröße ermittelt wird.

5. Verfahren nach Anspruch 4, **dadurch gekennzeichnet, dass** in zumindest einem Verfahrensschritt (108b) mittels der Auswerteeinheit (28b) in Abhängigkeit von einem Erfassungszeitpunkt eines erfassten spezifischen Signalverlaufs (102b) innerhalb eines zeitlichen Verlaufs der Magnetfeldkenngröße oder der Stromkenngröße die Kenngröße ermittelt wird, wobei sich der spezifische Signalverlauf (102b) bei der Abtriebsbewegung, insbesondere genau einmal, periodisch wiederholt.

6. Verfahren nach Anspruch 4 oder 5, **dadurch gekennzeichnet, dass** in zumindest einem Verfahrensschritt (108b) zu einer Ermittlung der Positionskenngröße mittels der Auswerteeinheit (28b) zumindest ein Übersetzungsparameter eines Getriebes (16b) der Handwerkzeugmaschine (10b) herangezogen wird.

7. Verfahren nach einem der vorhergehenden Ansprüche, **dadurch gekennzeichnet, dass** in zumindest einem Verfahrensschritt (84a; 114b; 178d) die zumindest zwei zeitlich versetzt erfassten Werte der Kenngröße mittels der Auswerteeinheit (28a; 28b; 28c; 28d) zur Erkennung eines Rückschlags oder eines Durchschlags der Handwerkzeugmaschine (10a; 10b; 10c; 10d) derart ausgewählt werden, dass eine Differenz von Erfassungszeitpunkten der zumindest zwei Werte der Kenngröße mehr als eine Periode (50a, 70a; 50b; 50c), zumindest im Wesentlichen genau einer Periode (50a, 70a; 50b; 50c) oder einem zumindest im Wesentlichen ganzzahligen Vielfachen einer Periode (50a, 70a; 50b; 50c) der oszillierenden, insbesondere linear-oszillierenden, Abtriebsbewegung beträgt.

8. Verfahren nach einem der vorhergehenden Ansprüche, **dadurch gekennzeichnet, dass** in zumindest einem Verfahrensschritt mittels der Auswerteeinheit (28c) eine Erkennung eines Rückschlags oder eines Durchschlags der Handwerkzeugmaschine (10c) in Abhängigkeit von einem Verhältnis einer Schwingungsfrequenz und einer Schwingungsamplitude (146c, 148c, 150c) eines zeitlichen Verlaufs einer Drehzahl eines Motors (12c) der Handwerkzeugmaschine (10c) erfolgt, welche zumindest in Abhängigkeit von den zwei Werten der Kenngröße ermittelt werden.

9. Verfahren nach einem der vorhergehenden Ansprüche, **dadurch gekennzeichnet, dass** in zumindest einem Verfahrensschritt (88a) mittels einer Bedienerschnittstelle (30a) eine Form und/oder eine Art eines auszugebenden elektronischen Steuersignals vorgegeben wird, wobei in zumindest einem weiteren Verfahrensschritt (86a) bei einer Erkennung eines Rückschlags oder eines Durchschlags der Handwerkzeugmaschine (10a; 10b; 10c) mittels der Auswerteeinheit (28a; 28b; 28c) das elektronische Steuersignal ausgegeben wird.

10. Vorrichtung zu einer Erkennung eines Rückschlags oder eines Durchschlags einer Handwerkzeugmaschine (10a; 10b; 10c; 10d), welche als eine Säbelsäge oder als eine Stichsäge oder als ein elektrischer Fuchsschwanz ausgebildet ist, mit einer linear-oszillierenden Abtriebsbewegung, mit zumindest einer Erfassungseinheit (26a; 26b; 26d) und mit zumindest einer Auswerteeinheit (28a; 28b; 28c; 28d), wobei die Vorrichtung dazu eingerichtet ist, das Verfahren (24a, 24b, 24c, 24d) nach einem der vorherigen Ansprüche durchzuführen.

11. Vorrichtung nach Anspruch 10, **dadurch gekennzeichnet, dass** die Erfassungseinheit (26a) dazu vorgesehen ist, zumindest einen Wert einer als Position, Geschwindigkeit und/oder Beschleunigung ausgebildeten Positionskenngröße der oszillierenden, insbesondere linear-oszillierenden, Abtriebsbewegung der Handwerkzeugmaschine (10a) zumindest im Wesentlichen direkt an einem Bearbeitungswerkzeug und/oder einem Abtriebselement der Handwerkzeugmaschine (10a) zu erfassen, wobei sich der zumindest eine Wert der Positionskenngröße bei der Abtriebsbewegung, insbesondere genau einmal, periodisch wiederholt.

12. Handwerkzeugmaschine, welche als eine Säbelsäge oder als eine Stichsäge oder als ein elektrischer Fuchsschwanz ausgebildet ist, mit einer linear-oszillierenden, Abtriebsbewegung und mit einer Vorrichtung (22a; 22b; 22c; 22d) nach Anspruch 10 oder 11.

## Claims

1. Method for identifying kickback or breakdown of a hand-held power tool (10a; 10b; 10c; 10d), which is designed as a reciprocating saw or as a jigsaw or as a sabre saw, comprising a linearly oscillating output movement, wherein in at least one method step (78a; 104b; 176d) at least one physical characteristic variable of a motor (12a; 12b; 12c; 12d), of the hand-held power tool (10a; 10b; 10c; 10d), is continuously or periodically detected by means of a detection unit (26a; 26b; 26d), wherein in at least one method step (84a; 112b) kickback or breakdown of the power tool (10a; 10b; 10c; 10d) is identified by means of an evaluation unit (28a; 28b; 28c; 28d) depending on at least two values of the characteristic variable of the motor (12a; 12b; 12c; 12d) detected with a time offset, **characterized in that** an, at least substantially, identical value of a discrete position characteristic variable of the linearly oscillating output movement of the hand-held power tool (10a; 10b; 10c; 10d) is assigned to each of the at least two values of the characteristic variable.

2. Method according to Claim 1, **characterized in that** in at least one method step (80a; 112b) at least one value of the position characteristic variable is assigned to, in particular specific or all, detected values of the characteristic variable by means of the evaluation unit (28a; 28b; 28c) depending on a detection time.

3. Method according to Claim 1 or 2, **characterized in that** in at least one method step (84a; 116b) a difference or a quotient of the at least two values of the characteristic variable detected with a time delay is determined by means of the evaluation unit (28a; 28b; 28c) and compared with at least one limit value in order to identify kickback or breakdown of the hand-held power tool (10a; 10b; 10c; 10d).

4. Method according to any of the preceding claims, **characterized in that** in at least one method step (104b) a magnetic field characteristic variable or a current characteristic variable of an electric motor (12b) of the hand-held power tool (10b) is detected by means of the detection unit (26b), wherein the characteristic variable and/or the position characteristic variable are/is determined by means of the evaluation unit (28b) depending on the detected magnetic field characteristic variable or current characteristic variable.

5. Method according to Claim 4, **characterized in that** in at least one method step (108b) the characteristic variable is determined by means of the evaluation unit (28b) depending on a detection time of a detected specific signal curve (102b) within a course of the magnetic field characteristic variable or the current characteristic variable over time, wherein the specific signal curve (102b) periodically repeats itself, in particular exactly once, during the output movement.

6. Method according to Claim 4 or 5, **characterized in that** in at least one method step (108b) at least one transmission parameter of a transmission (16b) of the hand-held power tool (10b) is used by means of the evaluation unit (28b) to determine the position characteristic variable.

7. Method according to any of the preceding claims, **characterized in that** in at least one method step (84a; 114b; 178d) the at least two values of the characteristic variable detected with a time offset are selected by means of the evaluation unit (28a; 28b; 28c; 28d) to identify kickback or breakdown of the hand-held power tool (10a; 10b; 10c; 10d) in such a way that a difference between detection times of the at least two values of the characteristic variable is more than one period (50a, 70a; 50b; 50c), at least substantially exactly one period (50a, 70a; 50b; 50c) or an at least substantially integer multiple of one period (50a, 70a; 50b; 50c) of the oscillating, in particular linearly oscillating, output movement.

8. Method according to any of the preceding claims, **characterized in that** in at least one method step kickback or breakdown of the hand-held power tool (10c) is identified by means of the evaluation unit (28c) depending on a ratio of a vibration frequency and a vibration amplitude (146c, 148c, 150c) of a course of a speed of a motor (12c) of the hand-held power tool (10c) over time, which vibration frequency and vibration amplitude are determined at least depending on the two values of the characteristic variable.

9. Method according to any of the preceding claims, **characterized in that** in at least one method step (88a) a form and/or a type of an electronic control signal to be output is specified by means of an operator interface (30a), wherein in at least one further method step (86a) the electronic control signal is output by means of the evaluation unit (28a; 28b; 28c) when kickback or breakdown of the hand-held power tool (10a; 10b; 10c) is identified.

10. Device for identifying kickback or breakdown of a hand-held power tool (10a; 10b; 10c; 10d), which is designed as a reciprocating saw or as a jigsaw or as a sabre saw, having a linearly oscillating output movement, having at least one detection unit (26a; 26b; 26d) and having at least one evaluation unit (28a; 28b; 28c; 28d), wherein the device is configured to carry out the method (24a, 24b, 24c, 24d) according to any of the preceding claims.

11. Device according to Claim 10, **characterized in that** the detection unit (26a) is provided to detect at least one value of a position characteristic variable, in the form of a position, speed and/or acceleration, of the oscillating, in particular linearly oscillating, output movement of the hand-held power tool (10a) at least substantially directly at a machining tool and/or an output element of the hand-held power tool (10a), wherein the at least one value of the position characteristic variable periodically repeats itself, in particular exactly once, during the output movement.

12. Hand-held power tool, which is designed as a reciprocating saw or as a jigsaw or as a sabre saw, having a linearly oscillating output movement and having a device (22a; 22b; 22c; 22d) according to Claim 10 or 11.

## Revendications

1. Procédé de détection d'un recul ou d'un claquage d'une machine-outil à main (10a ; 10b ; 10c ; 10d), qui est formée comme une scie sabre ou comme une scie sauteuse ou comme une scie égoïne électrique, avec un mouvement de sortie à oscillation linéaire, aul moins une grandeur caractéristique physique d'un moteur (12a ; 12b ; 12c ; 12d) de la machine-outil à main (10a ; 10b ; 10c ; 10d) étant enregistrée en continu ou périodiquement au moyen d'une unité d'enregistrement (26a ; 26b ; 26d) dans au moins une étape de procédé (78a ; 104b ; 176d), un recul ou un claquage de la machine-outil à main (10a ; 10b ; 10c ; 10d) étant détecté dans au moins une étape de procédé (84a ; 112b) au moyen d'une unité d'évaluation (28a ; 28b ; 28c ; 28d) en fonction d'au moins deux valeurs de la grandeur caractéristique du moteur (12a ; 12b ; 12c ; 12d) enregistrées de manière décalée dans le temps, **caractérisé en ce qu'**une valeur au moins sensiblement identique d'une grandeur caractéristique discrète de position du mouvement de sortie à oscillation linéaire de la machine-outil à main (10a ; 10b ; 10c ; 10d) est associée à chacune des au moins deux valeurs de la grandeur caractéristique.

2. Procédé selon la revendication 1, **caractérisé en ce que** respectivement au moins une valeur de la grandeur caractéristique de position est associée, dans au moins une étape de procédé (80a ; 112b), au moyen de l'unité d'évaluation (28a ; 28b ; 28c), en particulier à des valeurs enregistrées spécifiques ou à toutes les valeurs enregistrées de la grandeur caractéristique en fonction d'un temps d'enregistrement.

3. Procédé selon la revendication 1 ou 2, **caractérisé en ce qu'**une différence ou un quotient des au moins deux valeurs enregistrées de manière décalée dans le temps de la grandeur caractéristique est déterminée/déterminé et est comparée/comparé à au moins une valeur limite pour détecter un recul ou un claquage de la machine-outil à main (10a ; 10b ; 10c ; 10d) au moyen de l'unité d'évaluation (28a ; 28b ; 28c) dans au moins une étape de procédé (84a ; 116b).

4. Procédé selon l'une des revendications précédentes, **caractérisé en ce qu'**une grandeur caractéristique de champ magnétique ou une grandeur caractéristique de courant d'un moteur électrique (12b) de la machine-outil à main (10b) est enregistrée au moyen de l'unité d'enregistrement (26b) dans au moins une étape de procédé (104b), la grandeur caractéristique et/ou la grandeur caractéristique de position étant déterminée au moyen de l'unité d'évaluation (28b) en fonction de la grandeur caractéristique de champ magnétique ou de courant enregistrée.

5. Procédé selon la revendication 4, **caractérisé en ce que** la grandeur caractéristique est déterminée dans au moins une étape de procédé (108b) au moyen de l'unité d'évaluation (28b) en fonction d'un temps d'enregistrement d'un profil de signal (102b) spécifique enregistré dans un profil temporel de la grandeur caractéristique de champ magnétique ou de la grandeur caractéristique de courant, le profil de signal (102b) spécifique se répétant périodiquement pendant le mouvement de sortie, en particulier exactement une fois.

6. Procédé selon la revendication 4 ou 5, **caractérisé en ce qu'**au moins un paramètre de rapport de transmission (16b) de la machine-outil à main (10b) est utilisé pour déterminer la grandeur caractéristique de position au moyen de l'unité d'évaluation (28b) dans au moins une étape de procédé (108b).

7. Procédé selon l'une des revendications précédentes, **caractérisé en ce que** dans au moins une étape de procédé (84a ; 114b ; 178d), les au moins deux valeurs de la grandeur caractéristique enregistrées de manière décalée dans le temps sont choisies au moyen de l'unité d'évaluation (28a ; 28b ; 28c ; 28d) pour détecter un recul ou un claquage de la machine-outil à main (10a ; 10b ; 10c ; 10d) de telle manière qu'une différence de temps d'enregistrement des au moins deux valeurs de la grandeur caractéristique est supérieure à une période (50a, 70a ; 50b ; 50c), au moins sensiblement exactement à une période (50a, 70a ; 50b; 50c) ou un multiple au moins sensiblement entier d'une période (50a, 70a ; 50b; 50c) du mouvement de sortie à oscillation, en particulier à oscillation linéaire.

8. Procédé selon l'une des revendications précédentes, **caractérisé en ce que**, dans au moins une étape du procédé, une détection d'un recul ou d'un claquage de la machine-outil à main (10c) est effectuée au moyen de l'unité d'évaluation (28c) en fonction d'un rapport entre une fréquence d'oscillation et une amplitude d'oscillation (146c, 148c, 150c) d'un profil temporel d'une vitesse de rotation d'un moteur (12c) de la machine-outil à main (10c), qui est déterminée au moins en fonction des deux valeurs de la grandeur caractéristique.

9. Procédé selon l'une des revendications précédentes, **caractérisé en ce que** dans au moins une étape de procédé (88a), une forme et/ou un type d'un signal de commande électronique à délivrer sont prédéfinis au moyen d'une interface d'utilisation (30a), le signal de commande électronique étant délivré dans au moins une autre étape de procédé (86a) lors d'une détection d'un recul ou d'un claquage de la machine-outil à main (10a ; 10b ; 10c) au moyen de l'unité d'évaluation (28a ; 28b ; 28c).

10. Dispositif de détection d'un recul ou d'un claquage d'une machine-outil à main (10a ; 10b ; 10c ; 10d), qui est formée comme une scie sabre ou comme une scie sauteuse ou comme une scie égoïne, avec un déplacement de sortie à oscillation linéaire, avec au moins une unité d'enregistrement (26a ; 26b ; 26d) et avec au moins une unité d'évaluation (28a ; 28b ; 28c ; 28d), le dispositif étant mis au point pour mettre en œuvre le procédé (24a, 24b, 24c, 24d) selon l'une des revendications précédentes.

11. Dispositif selon la revendication 10, **caractérisé en ce que** l'unité d'enregistrement (26a) est prévue pour enregistrer au moins une valeur d'une grandeur caractéristique de position, formée comme une position, une vitesse et/ou une accélération, du mouvement de sortie à oscillation, en particulier à oscillation linéaire, de la machine-outil à main (10a) au moins sensiblement directement sur un outil d'usinage et/ou un élément de sortie de la machine-outil à main (10a), l'au moins une valeur de la grandeur caractéristique de position se répétant périodiquement pendant le mouvement de sortie, en particulier exactement une fois.

12. Machine-outil à main, qui est formée comme une scie sabre ou une scie sauteuse ou une scie égoïne électrique, avec un mouvement de sortie à oscillation linéaire et avec un dispositif (22a ; 22b ; 22c ; 22d) selon la revendication 10 ou 11.
